(19) Europäisches Patentamt
European Patent Office
Office européen des brevets

(11) **EP 2 434 309 A1**

(12) **EUROPEAN PATENT APPLICATION**
published in accordance with Art. 153(4) EPC

(43) Date of publication:
**28.03.2012 Bulletin 2012/13**

(51) Int Cl.:
**G01S 13/34** (2006.01)  **G01S 7/02** (2006.01)
**G01S 13/44** (2006.01)

(21) Application number: **10777616.3**

(22) Date of filing: **19.03.2010**

(86) International application number:
**PCT/JP2010/054839**

(87) International publication number:
**WO 2010/134381 (25.11.2010 Gazette 2010/47)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.05.2009 JP 2009121902**

(71) Applicant: **Kabushiki Kaisha Toshiba Minato-ku Tokyo 105-8001 (JP)**

(72) Inventors:
• **TAKEYA, Shinichi**
  **Tokyo 105-8001 (JP)**
• **KAWABATA, Kazuaki**
  **Tokyo 105-8001 (JP)**
• **OOSUGA, Kazuki**
  **Tokyo 105-8001 (JP)**
• **YOSHIDA, Takuji**
  **Tokyo 105-8001 (JP)**
• **YOSHIDA, Tomohiro**
  **Tokyo 105-8001 (JP)**
• **NIWA, Masato**
  **Tokyo 105-8001 (JP)**
• **GOTO, Hideto**
  **Tokyo 105-8001 (JP)**

(74) Representative: **HOFFMANN EITLE Patent- und Rechtsanwälte Arabellastraße 4 81925 München (DE)**

(54) **RADAR DEVICE**

(57) The present invention includes: a transmitter/receiver 20 that transmits an FMCW modulated sweep signal at least twice; an FFT unit 32 that performs Fast Fourier Transform on the at least two sweep signals received in response to the transmission from the transmitter/receiver; and an MRAV processor 35a that calculates ranges and velocities of multiple targets by calculating beat frequencies corresponding to at least two sweeps by the transmitter/receiver based on the at least two sweep signals obtained by the Fourier Transform performed by the FFT unit, calculating velocities based on a frequency difference and a time difference of the calculated beat frequencies, and calculating ranges based on the calculated velocities and beat frequencies.

FIG. 7

**Description**

[Field of the Invention]

The present invention relates to a radar apparatus that observes range and velocity of a vehicle by using an FMCW (Frequency Modulated Continuous Wave) system.

[Background Art]

As a simple radar system for observing vehicles traveling on a road, an FMCW system is known (for example, refer to Non-patent Document 1). In the case of the radar apparatus employing the FMCW system, range and velocity of the vehicle are unknown quantities. Thus, in general, by combining up-chirp and down-chirp for transmission/reception waveform, the two parameters are calculated at the same time.

However, on the beat frequency axis, the frequencies of transmitted/received signals for the up-chirp and down-chirp are different even for the same target. Thus, when only a single target is present, the correspondence between the up-chirp and down-chirp can be established. However, when multiple targets are present, a problem occurs in that pairing the up-chirp and down-chirp for each target is difficult. Also, another problem occurs in that the cycle time tends to be long because the up-chirp and down-chirp need to be transmitted/received.

Also, when the frequency band related to the range resolution or the antenna aperture length related to the angular resolution is limited, still another problem occurs in that the resolution performance for dense targets is limited.

In addition to these problems, if an integral number N is small in the case of the same FRF (Pulse Repetition Frequency), each frequency bank width (PRF/N) on the beat frequency axis after FFT (Fast Fourier Transform) is performed on signals is increased, thus the frequency resolution deteriorates, and the accuracy of the range and velocity calculated based on the frequency is reduced.

Furthermore, when a complex signal is extracted by performing the Complex Fourier Transform on a real number signal to extract only a positive (or negative) frequency, if the actual sign of the target beat frequency is negative (or positive), correct range, velocity, and angle cannot be calculated.

The beat frequency becomes close to DC (frequency is 0) components for a short range. Still, the beat frequency needs to be separated from the DC even for a short range by increasing the frequency slope (frequency band B/sweep time T). In this case, if the frequency band B and the sample frequency PRF are limited, a problem occurs in that the integral number N cannot be made large. Especially, in the case of observing a target at a long range, smaller integral number causes reduced SN ratio (signal-noise ratio), thus the detection performance and accuracy are reduced.

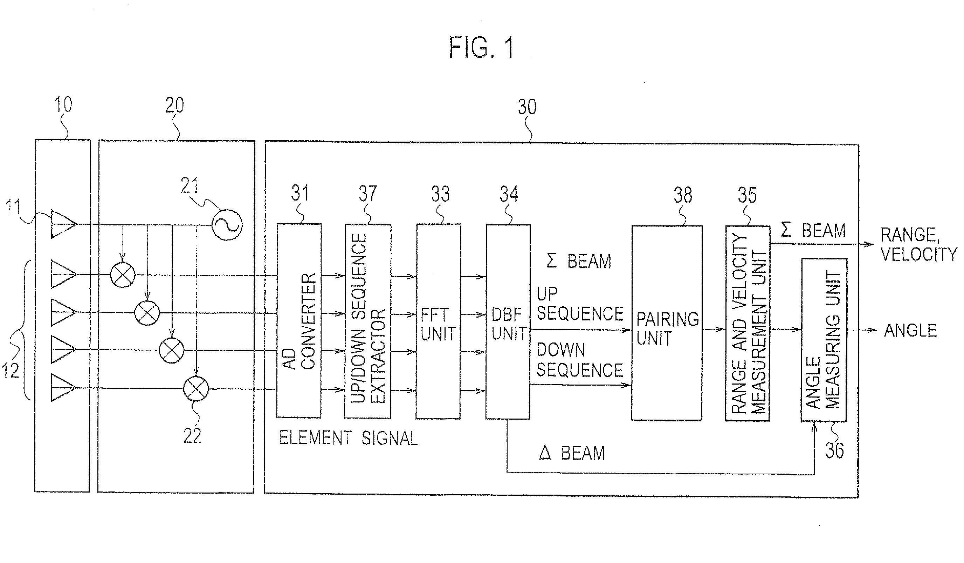

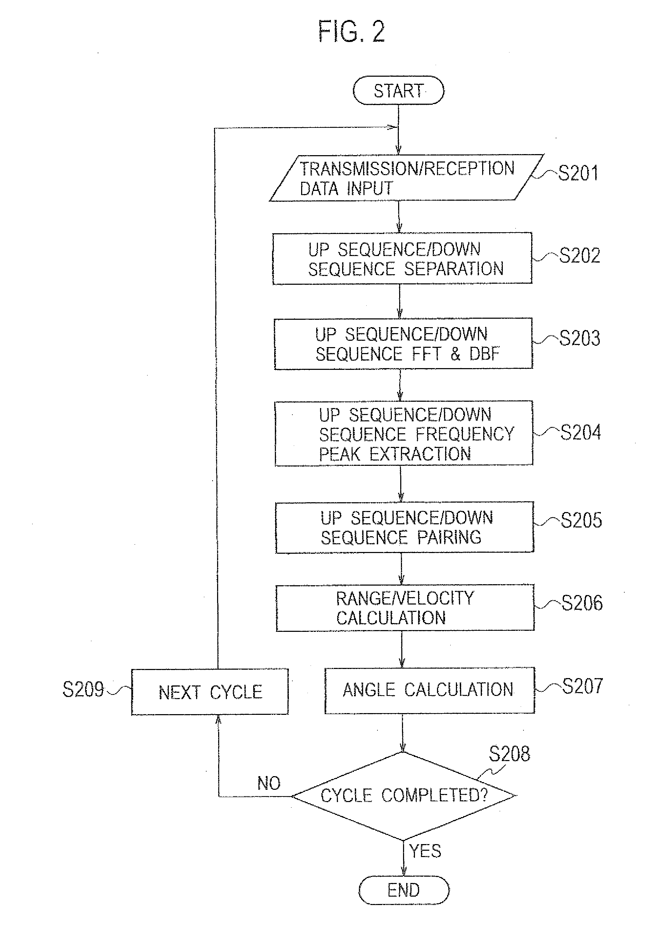

FIG. 1 is a system diagram showing a configuration of a conventional radar apparatus, and FIG. 2 is a flowchart showing operations of the radar apparatus. This radar apparatus includes an antenna 10, a transmitter/receiver 20, and a signal processor 30.

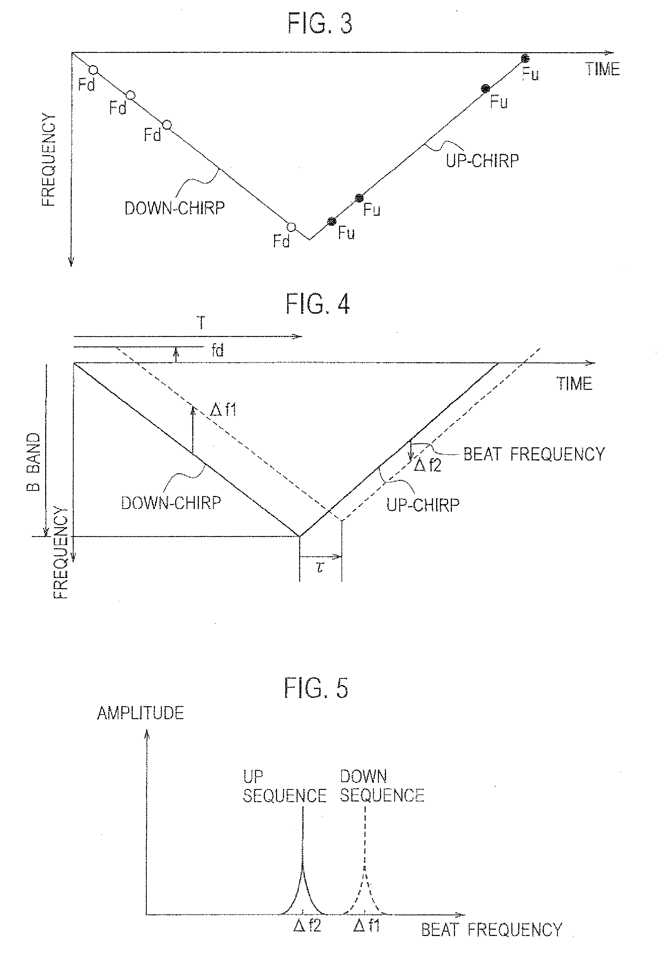

A signal swept by a transmitter 21 inside the transmitter/receiver 20 is transmitted from an antenna transmission element 11. On the other hand, signals received by multiple antenna receive elements 12 each undergo frequency conversion by multiple mixers 22, then are sent to the signal processor 30. In the signal processor 30, the beat frequency signal from the transmitter/receiver 20 is converted to digital signals by an AD converter 31 to be sent to an up/down sequence extractor 37 as element signals (step S201). FIGS. 3 and 4 show a sweep signal as an up and down chirp to be transmitted/received.

The up/down sequence extractor 37 separates up-chirp and down-chirp signals from the element signals (digital signals) sent from the AD converter 31 to forward the up-chirp and down-chirp signals to an FFT unit 33 (step S202). The FFT unit 33 performs Fast Fourier Transform on the up-chirp and down-chirp signals sent from the up/down sequence extractor 37 to convert the signals into signals on the frequency axis, and forwards the signals to a DBF (Digital Beam Forming) unit 34.

The DBF unit 34 forms a $\Sigma$ beam (up and down sequences) and a $\Delta$ beam by using the signals of the frequency axis sent from the FFT unit 33 (step S203). The $\Sigma$ beam formed in the DBF unit 34 is sent to a pairing unit 38, and the $\Delta$ beam formed in the DBF unit 34 is forwarded to an angle measuring unit 36. The pairing unit 38 extracts frequencies of extreme amplitude as shown in FIG. 5 base on resultant FFT processed up and down sequence signals of the $\Sigma$ beam (step S204). The above relationship is shown by the following equations.

[Equations 1]

$$\Delta f1 = fd - fr$$

$$\Delta f2 = fd + fr \; ... \; (1)$$

$$fr = \frac{\Delta f2 - \Delta f1}{2}$$

$$fd = \frac{\Delta f2 + \Delta f1}{2} \; ... \; (2)$$

where

$\Delta$f1: observed frequency of down-chirp signal,
$\Delta$f2: observed frequency of up-chirp signal,
fd: Doppler frequency, and
fr: range-related frequency.

The range-related frequency fr and the Doppler frequency fd related to target velocity are given by the following equations.

[Equations 2]

$$fr = 2 \frac{B}{c \cdot T} R$$

$$fd = -\frac{2V}{\lambda} \qquad ... \; (3)$$

Solving the equations (3) for the target range R, and target velocity V, and substituting the equations (2) into the resultant equations gives the following equations.

[Equations 3]

$$R = \frac{c \cdot T}{2B} fr$$

$$= \frac{c \cdot T}{2B} \cdot \frac{\Delta f2 - \Delta f1}{2}$$

$$V = -\frac{\lambda}{2fd} \qquad \dots (4)$$

$$= -\frac{\lambda}{2} \cdot \frac{2}{\Delta f2 + \Delta f1}$$

where

B: frequency band,
R: target range,
T: sweep time,
c: speed of light,
V: target velocity, and
λ: wave length.

When the above processing is completed, pairing of up sequence and down sequence is performed (step S205). That is, since the peak frequencies of down-chirp sequence and up-chirp sequence are different, processing to match a pair of frequencies is performed. The target range and velocity are then calculated (step S206), and the angle is calculated (step S207).

Subsequently, it is checked whether the cycle is completed or not (step S208). If the cycle is not completed in step S208, the process proceeds with processing of the next cycle (step S209). Subsequently, the process returns to step S201 and the above-described processing is repeated. On the other hand, if the cycle is completed in step S208, the processing by the radar apparatus is terminated.

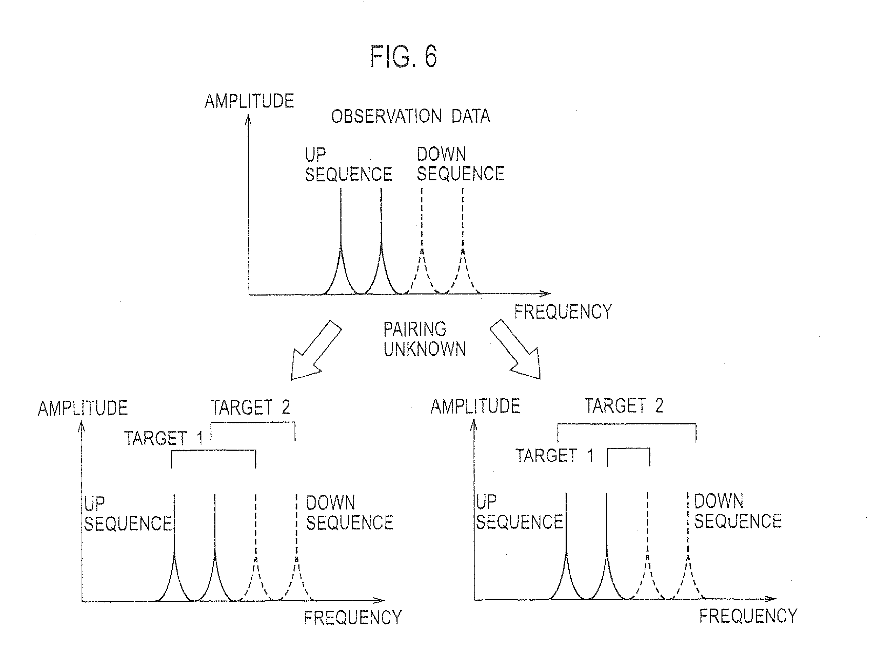

By the above processing, the target range R and velocity V can be calculated. As described above, since the peak frequencies of down-chirp sequence and up-chirp sequence are different, a pair of frequencies needs to be matched. In the case of a single target or a small number of targets, the pairing is relatively easy. However, as the number of targets or reflection points in a background is increased, peak values on the frequency axis increase as shown FIG. 6, causing a problem that the pairing becomes difficult.

[Prior Art Document]

[Non-patent Document]

[Non-patent Document 1] Takashi Yoshida (editorial supervision), "Radar Technology, revised version", the Institute of Electronics, Information and Communication Engineers, pp. 274 and 275 (1996)

[Disclosure of the Invention]

[Problems to be Solved by the Invention]

As described above, a conventional radar apparatus has the following problems.
(1) When up-chirp and down-chirp signals are combined as a transmission/reception waveform, if multiple targets are present, the pairing is difficult. Also, since the up-chirp and down-chirp signals need to be transmitted/received, the cycle time is increased.

(2) When the range resolution or angular resolution is limited, the resolution performance for dense targets is limited.

(3) If the integral number N is small in the case of the same PRF, each frequency bank width on the beat frequency axis after the Fast Fourier Transform is performed on signals is increased, thus the frequency resolution deteriorates, and the accuracy of the range and velocity calculated based on the frequency is reduced.

(4) When a complex signal is extracted by performing the Complex Fourier Transform on a real number signal to extract only a positive (or negative) frequency, if the actual sign of the target beat frequency is negative (or positive), correct range, velocity, and angle cannot be calculated.

(5) Since the beat frequency becomes close to DC (frequency is 0) components for a short range, the frequency slope needs to be increased. In this case, if the frequency band B and the sample frequency PRF are limited, the integral number N cannot be made large.

An object of the present invention is to provide a radar apparatus capable of observing a target with high detection performance and a high precision even if multiple targets are present in a wide area from a short range to a long range.

[Means for Solving the Problems]

To solve the problems, the first invention includes: a transmitter/receiver that transmits an FMCW modulated sweep signal M times; an FFT unit that performs Fast Fourier Transform on the M sweep signals received in response to transmission from the transmitter/receiver; and an MRAV processor configured so that, when a maximum value of each sweep signal is calculated from the M sweep signals obtained by the Fourier Transform performed by the FFT unit, the MRAV processor performs: amplitude integration on beat frequency-sweep axis in a sweep direction for each of beat frequencies by using F (sweep number, target number) resulting from calculation of the beat frequencies by phase monopulse, amplitude monopulse, or MUSIC of M sweeps; calculates a least square line with respect to a relative range and a sweep time of a sweep number exceeding a predetermined threshold sweep for each frequency bank exceeding the predetermined threshold; calculates a target velocity from a slope of the least square line; and calculates a target range.

To solve the problems, the second invention includes: a transmitter/receiver that transmits an FMCW modulated sweep signal at least twice; an FFT unit that performs Fast Fourier Transform on the at least two sweep signals received in response to transmission from the transmitter/receiver; and an MRAV processor that calculates ranges and velocities of multiple targets by calculating beat frequencies corresponding to at least two sweeps by the transmitter/receiver based on the at least two sweep signals obtained by the Fourier Transform performed by the EFT unit, calculating velocities based on a frequency difference and a time difference of the calculated beat frequencies, and calculating ranges based on the calculated velocities and beat frequencies

To solve the problems, the third invention includes: a transmitter/receiver that transmits an FMCW modulated sweep signal M times; an FFT unit that perform Fast Fourier Transform on the M sweep signals received in response to the transmission from the transmitter/receiver; and an MRAV processor that performs smoothing over sweeps using F (sweep number, target number) resulting from calculation of beat frequencies by phase monopulse, amplitude monopulse, or MUSIC of the M sweeps when calculating a maximum value of each sweep signal from the M sweep signals obtained by Fourier Transform performed by the FFT unit, and calculates a range after calculating a velocity based on results of the smoothing.

To solve the problems, the fourth invention includes: a transmitter/receiver that transmits an FMCW modulated sweep signal M times; an FFT unit that performs Fast Fourier Transform on the M sweep signals received in response to transmission from the transmitter/receiver; and an MRAV processor that calculates a local maximum value on beat frequency-sweep axis by Hough transformation using F (sweep number, target number) resulting from calculation of beat frequencies by phase monopulse, amplitude monopulse,, or MUSIC of the M sweeps when calculating a maximum value of each sweep signal from the M sweep signals obtained by Fourier Transform performed by the FFT unit, and calculates a range after calculating a velocity corresponding to the calculated local maximum value from a beat frequency difference and a sweep time

[Effects of the Invention]

According to the first invention, on the beat frequency-sweep axis, by integrating the amplitude in the sweep direction for every beat frequency, an integration effect over multiple sweeps is obtained to improve the signal detection performance. Also, the range is calculated after the slope of a line extracted by fitting a least square line is calculated to determine the velocity. Accordingly, even if an error is present in the difference between the relative ranges, the influence of the error is reduced, and the accuracy in measuring the velocity and range can be improved.

According to the second invention, when multiple targets are present, pairing is not needed to be performed as in the conventional radar apparatus, and also, radar observation with a short cycle time may be achieved.

According to the third invention, the velocity and range are calculated by smoothing the relative range differences over sweeps, thus even if an error is present in the difference between the relative ranges, the influence of the error is reduced, and the accuracy in measuring the velocity and range can be improved.

According to the fourth invention, by performing the Hough transformation on the beat frequency-sweep axis, an integration effect over multiple sweeps is obtained to improve the signal detection performance. Also, the range is calculated after the slope of each line extracted by the Hough transformation is calculated to determine the velocity. Accordingly, even if an error is present in the relative range difference, the influence of the error is reduced, and the accuracy in measuring the velocity and range can be improved.

[Brief Description of Drawings]

[FIG. 1] FIG. 1 is a system diagram showing a configuration of a conventional radar apparatus.
[FIG. 2] FIG. 2 is a flowchart showing operations of a conventional radar apparatus.
[FIG. 3] FIG. 3 is a diagram showing a transmission/reception signal of a conventional radar apparatus.
[FIG. 4] FIG. 4 is a diagram showing a transmission/reception signal of a conventional radar apparatus.
[FIG. 5] FIG. 5 is a diagram for illustrating processing of a conventional radar apparatus.
[FIG. 6] FIG. 6 is a diagram for illustrating a problem of a conventional radar apparatus.
[FIG. 7] FIG. 7 is a system diagram showing a configuration of a radar apparatus according to Embodiment 1 of the present invention.
[FIG. 8] FIG. 8 is a flowchart showing measurement processing performed in a radar apparatus according to Embodiment 1 of the present invention.
[FIG. 9] FIG. 9 is a diagram for illustrating a sweep signal performed in a radar apparatus according to Embodiment 1 of the present invention.
[FIG. 10] FIG. 10 is a diagram for illustrating how a beat frequency is extracted in a radar apparatus according to Embodiment 1 of the present invention.
[FIG. 11] FIG. 11 is a diagram for illustrating a process in a radar apparatus according to Embodiment 1 of the present invention.
[FIG. 12] FIG. 12 is a diagram for illustrating another process in a radar apparatus according to Embodiment 1 of the present invention.
[FIG. 13] FIG. 13 is a flowchart showing measurement processing performed in a radar apparatus according to Embodiment 2 of the present invention.
[FIG. 14] FIG. 14 is a diagram for illustrating measurement processing performed in a radar apparatus according to Embodiment 2 of the present invention.
[FIG. 15] FIG. 15 is a diagram for illustrating formation of $\Sigma$ and $\Delta$ in measurement processing performed in a radar apparatus according to Embodiment 2 of the present invention.
[FIG. 16] FIG. 16 is a diagram for illustrating a calculation of error voltage in measurement processing performed in a radar apparatus according to Embodiment 2 of the present invention.
[FIG. 17] FIG. 17 is a diagram for illustrating a calculation of error voltage in measurement processing performed in a radar apparatus according to Embodiment 3 of the present invention.
[FIG. 18] FIG. 18 is a diagram for illustrating a calculation of error voltage in measurement processing performed in a radar apparatus according to Embodiment 3 of the present invention.

[FIG. 19] FIG. 19 is a flowchart showing measurement processing performed in a radar apparatus according to Embodiment 4 of the present invention.

[FIG. 20] FIG. 20 is a diagram for illustrating measurement processing performed in a radar apparatus according to Embodiment 4 of the present invention.

[FIG. 21] FIG. 21 is a system diagram showing a configuration of a radar apparatus according to Embodiment 5 of the present invention.

[FIG. 22] FIG. 22 is a flowchart for showing measurement processing performed in a radar apparatus according to Embodiment 5 of the present invention.

[FIG. 23] FIG. 23 is a diagram for showing measurement processing performed in a radar apparatus according to Embodiment 5 of the present invention.

[FIG. 24] FIG. 24 is a diagram for showing measurement processing performed in a radar apparatus according to Embodiment 5 of the present invention.

[FIG. 25] FIG. 25 is a diagram for showing measurement processing performed in a radar apparatus according to Embodiment 5 of the present invention.

[FIG. 26] FIG. 26 is a diagram for showing measurement processing performed in a radar apparatus according to Embodiment 5 of the present invention.

[FIG. 27] FIG. 27 is a diagram for showing measurement processing performed in a radar apparatus according to Embodiment 5 of the present invention.

[FIG. 28] FIG. 28 is a diagram for showing measurement processing performed in a radar apparatus according to Embodiment 6 and Embodiment 7 of the present invention.

[FIG. 29] FIG. 29 is a flowchart for showing measurement processing performed in a radar apparatus according to Embodiment 6 and Embodiment 7 of the present invention.

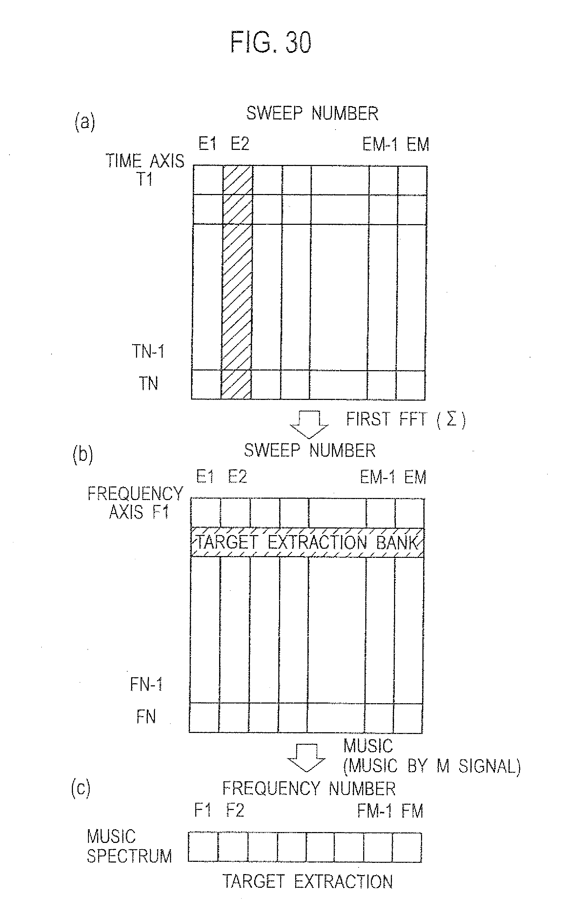

[FIG. 30] FIG. 30 is a diagram for showing measurement processing performed in a radar apparatus according to Embodiment 8 of the present invention.

[FIG. 31] FIG. 31 is a flowchart for showing measurement processing performed in a radar apparatus according to Embodiment 8 of the present invention.

[FIG. 32] FIG. 32 is a flowchart for showing measurement processing performed in a radar apparatus according to Embodiment 8 of the present invention.

[FIG. 33] FIG. 33 is a diagram for showing measurement processing performed in a radar apparatus according to Embodiment 9 of the present invention.

[FIG. 34] FIG. 34 is a system diagram showing a configuration of a radar apparatus according to Embodiment 10 of the present invention.

[FIG. 35] FIG. 35 is a diagram for illustrating a sweep signal used in a radar apparatus according to Embodiment 10 of the present invention.

[FIG. 36] FIG. 36 is a diagram for illustrating a sweep signal used in a radar apparatus according to Embodiment 10 of the present invention.

[FIG. 37] FIG. 37 is a system diagram showing a configuration of a radar apparatus according to Embodiment 11 of the present invention.

[FIG. 38] FIG. 38 is a diagram for illustrating a sweep signal used in a radar apparatus according to Embodiment 11 of the present invention.

[FIG. 39] FIG. 39 is a flowchart showing processing performed in a radar apparatus according to Embodiment 11 of the present invention.

[FIG. 40] FIG. 40 is a flowchart showing processing performed in a radar apparatus according to Embodiment 12 of the present invention.

[FIG. 41] FIG. 41 is a diagram for illustrating processing performed in a radar apparatus according to Embodiment 12 of the present invention,

[FIG. 42] FIG. 42 is a diagram for illustrating processing performed in a radar apparatus according to Embodiment 13 of the present invention.

[FIG. 43] FIG. 43 is a flowchart showing processing performed in a radar apparatus according to Embodiment 13 of the present invention.

[FIG. 44] FIG. 44 is a diagram for illustrating processing performed in a radar apparatus according to Embodiment 14 of the present invention.

[FIG. 45] FIG. 45 is a flowchart showing processing performed in a radar apparatus according to Embodiment 14 of the present invention.

[FIG. 46] FIG. 46 is a diagram for illustrating the Hough transformation performed in a radar apparatus according to Embodiment 14 of the present invention.

[FIG. 47] FIG. 47 is a diagram for illustrating the Hough transformation performed in a radar apparatus according to Embodiment 14 of the present invention.

[FIG. 48] FIG. 48 is a diagram for illustrating the Hough transformation performed in a radar apparatus according to Embodiment 14 of the present invention.

[FIG. 49] FIG. 49 is a diagram for illustrating the Hough transformation performed in a radar apparatus according to Embodiment 14 of the present invention.

[FIG. 50] FIG. 50 is a diagram for illustrating processing performed in a radar apparatus according to Embodiment 15 of the present invention.

[FIG. 51] FIG. 51 is a flowchart showing processing performed in a radar apparatus according to Embodiment 15 of the present invention.

[Best Modes for Carrying Out the Invention]

In the following, embodiments of the present invention are described in detail with reference to the drawings. The radar apparatus according to the present invention employs a simple system of pairing sequences between the banks with the same frequency or between neighboring banks by using FMCW signals having continuity, which are easy to be implemented.

[Embodiment 1]

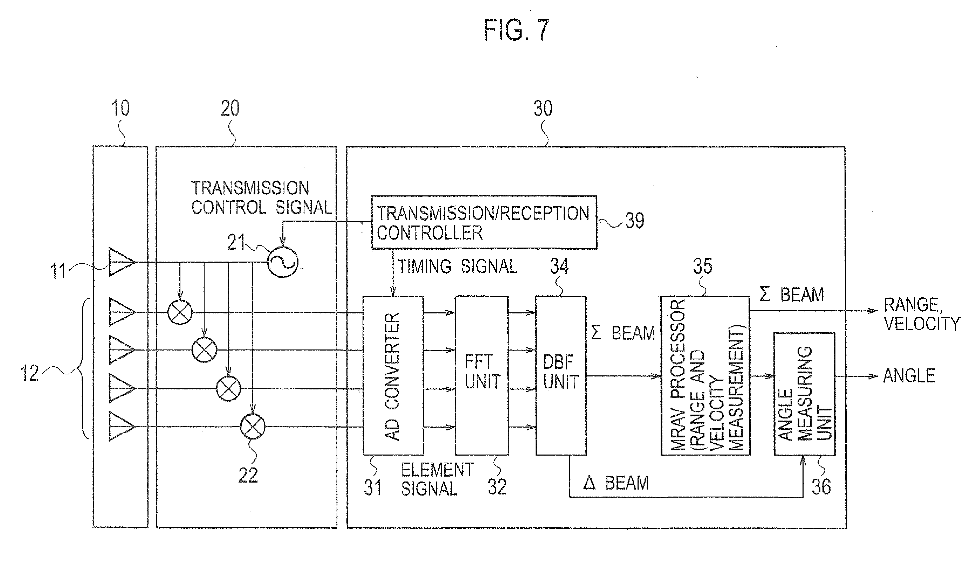

A radar apparatus according to Embodiment 1 of the present invention employs MRAV (Measurement Range after measurement Velocity) system by which a range is measured after a velocity is measured by a beat frequency. FIG. 7 is a system diagram showing a configuration of a radar apparatus according to Embodiment 1 of the present invention. The radar apparatus includes an antenna 10, a transmitter/receiver 20, and a signal processor 30a.

The antenna 10 is configured with an antenna transmitting element 11 and multiple antenna receiving elements 12. The antenna transmitting element 11 converts a transmission signal transmitted from the transmitter/receiver 20 as an electrical signal into a radio wave to send it to the outside. Multiple antenna receiving elements 12 receive radio waves from the outside to convert them into electrical signals, and send the signals as reception signals to the transmitter/ receiver 20.

The transmitter/receiver 20 includes a transmitter 21 and multiple mixers 22. The multiple mixers 22 are provided for respective multiple antenna receiving elements 12. The transmitter 21 generates a transmission signal according to a transmission control signal sent from the signal processor 30, and sends the generated signal to the antenna transmitting element 11 and the multiple mixers 22. The multiple mixers 22 convert the frequencies of reception signals received from respective multiple antenna receiving elements 12 according to a signal from the transmitter 21, and forward the resultant signals to the signal processor 30.

The signal processor 30a includes an AD converter 31, an FFT unit 32, a DBF unit 34, an MRAV processor 35a, an angle measuring unit 36, and a transmission/reception controller 39.

The AD converter 31 converts an analog signal sent from the transmitter/receiver 20 into a digital signal according to a timing signal sent from the transmission/reception controller 39, and forwards the digital signal to the FFT unit 32 as an element signal.

The FFT unit 32 converts an element signal sent from the AD converter 31 into a signal on the frequency axis by the Fast Fourier Transform, and forwards the transformed signal to the DBF unit 34.

The DBF unit 34 forms $\Sigma$ beam and $\Delta$ beam using the signal on the frequency axis sent from the FFT unit 33. The $\Sigma$ beam formed in the DBF unit 34 is sent to the MRAV processor 35a, and the $\Delta$ eam formed in the DBF unit 34 is sent to the angle measuring unit 36.

The MRAV processor 35a measures range and velocity based on the $\Sigma$ beam from the DBF unit 34. The range and velocity obtained by the range and velocity measurements in the MRAV processor 35a are outputted to the outside.

The angle measuring unit 36 measures an angle based on the $\Delta$ beam sent from the DBF unit 34. The angle obtained by angle measurement in the angle measuring unit 36 is outputted to the outside.

The transmission/reception controller 39 generates the transmission control signal to start transmission and sends the transmission control signal to the transmitter 21 of the transmitter/receiver 20 and also generates the timing signal to specify the timing at which a signal is taken in from the transmitter/receiver 20, and sends the timing signal to the AD converter 31.

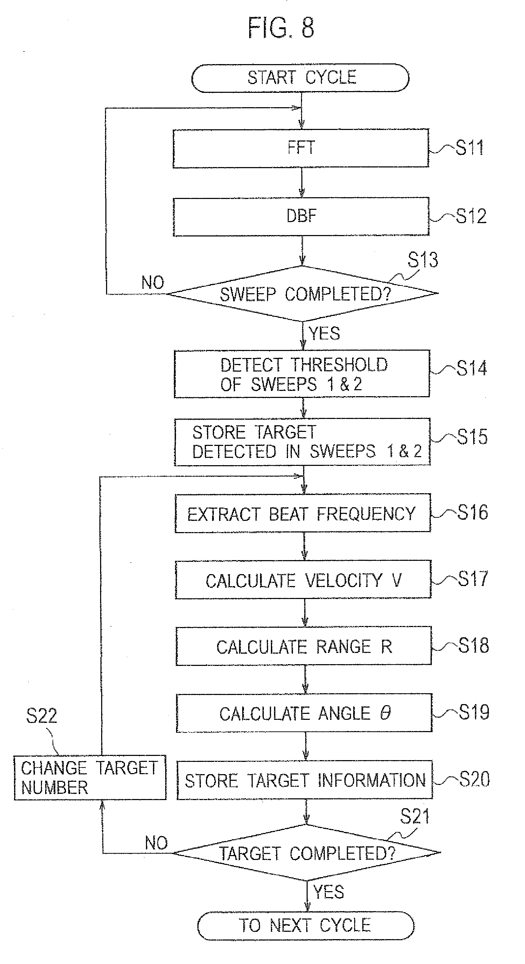

Next, operations of the radar apparatus according to Embodiment 1 of the present invention configured as mentioned above are described with reference to the flowchart shown in FIG. 8 focused on processing for range, velocity, and angle measurement.

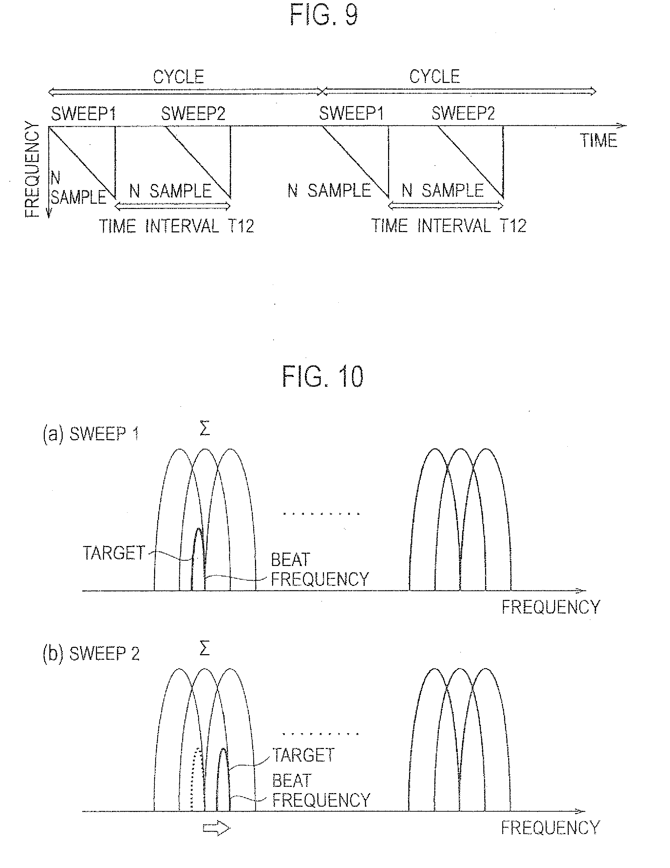

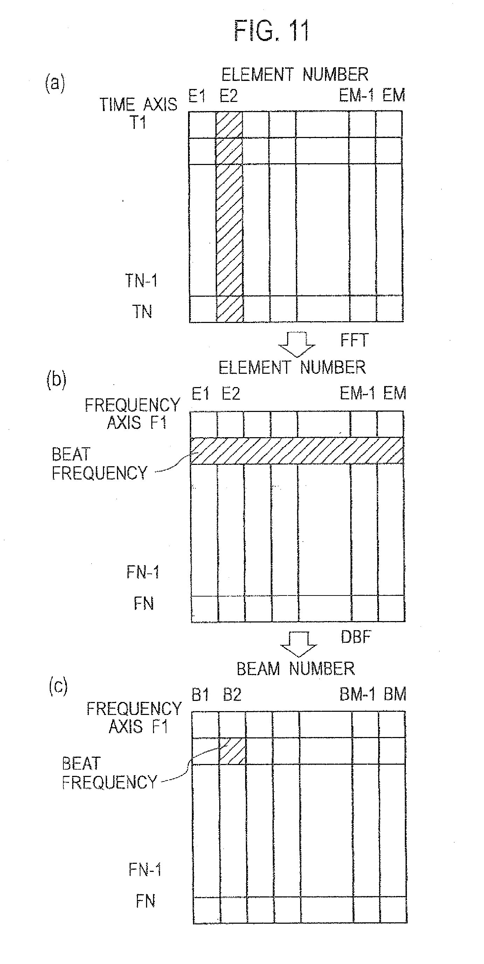

In measurement processing, when a cycle is started, first, the frequency changes continuously as shown in FIG. 9. That is, a sweep 1, which is an FM modulated sweep signal, is transmitted from the antenna transmitting element 11, and the transmitted signal is received by the antenna receiving elements 12. The received signal undergoes frequency conversion by the transmitter/receiver 20, and is then sent to the AD converter 31 of the signal processor 30a. The AD converter 31 converts the analog signal sent from the transmitter/receiver 20 to a digital signal. Accordingly, for each of the antenna receiving elements 12 labeled with element numbers E1 to EM as shown in FIG. 11(a), N sampling signals corresponding to respective time axes T1 to TN are obtained. The signal obtained by the AD converter 31 is sent to the FFT unit 32 as an element signal.

In this state, Fast Fourier Transform (FFT) is performed (step S11). That is, the FFT unit 32 performs the Fast Fourier Transform on the element signal sent from the AD converter 31. Accordingly, as shown in FIG. 11(b), for the antenna receiving elements 12 labeled with the element numbers E1 to EM, N sampling beat frequency signals on the frequency axis corresponding to respective frequency axes F1 to FN are obtained. The beat frequency signals obtained by the FFT unit 32 are forwarded to the DBF unit 34.

The DBF processing is then performed (step S12). That is, the DBF unit 34 forms $\Sigma$ beam and $\Delta$ beam in the angular direction using the signal on the frequency axis sent from the FFT unit 33. Thus, as shown in FIG. 11(c), beam having a peak at a specific beam number (for example, B2) is formed. The $\Sigma$ beam formed in the DBF unit 34 is sent to the MRAV processor 35, and the $\Delta$ beam formed in the DBF unit 34 is sent to the angle measuring unit 36.

It is then determined whether the sweep is completed or not (step S13). That is, it is checked whether processing for both sweep 1 and sweep 2 is completed. In step S13, if the sweep is not completed, the process returns to step S11 and the processing described above is repeated for the sweep 2, which is the next FM modulated sweep signal.

On the other hand, if the sweep is completed in step S13, threshold level detection of the sweep 1 and sweep 2 is performed (step S14). That is, the DBF unit 34 detects a threshold level of the $\Sigma$ beam obtained by the sweep 1 and sweep 2. Then the target detected in step S14 is stored (step S15). That is, the DBF unit 34 detects a target from the threshold level detected in step S14, and stores the target.

A beat frequency is then extracted (step S16). That is, the MRAV processor 35a extracts a beat frequency fp and a bank signal having a peak signal based on the result of performing the FFT and DBF on the sweep 1 and sweep 2 as shown in FIG. 10.

The velocity V is then calculated (step S17). That is, the MRAV processor 35a calculates relative ranges R1 and R2 using the beat frequency fp of the sweep 1 and sweep 2, and calculates the velocity V = (R2-R1)/T12.

The range R is then calculated (step S18).

[Equation 4]

$$R = \frac{c}{2} \cdot \frac{T}{B} fp \quad \dots (5)$$

where
R: range,
T: sweep time,
B: frequency band,
fp: beat frequency, and
c: speed of light.

The range R and velocity V are calculated from simultaneous equations based on the beat frequency fp and velocity V.

[Equations 5]

$$v = \frac{R2 - R1}{T12}$$

$$fp = -\frac{2v}{\lambda} - \frac{2R}{c} \cdot \frac{B}{T} \quad \dots (6)$$

$$R = -\frac{c}{2} \cdot \frac{T}{B}(fp + \frac{2v}{\lambda})$$

v: velocity,
R1, R2: ranges for the sweep 1 and 2,
T12: time interval beween the sweep 1 and 2,
fp: beat frequency,
λ: wave length,
B: band, and
T: sweep time.

The angle θ is then calculated (step S19). That is, the angle measuring unit 36 measures angle based on the Δ beam sent from the DBF unit 34, and outputs the angle obtained by the angle measurement to the outside.

The target information is then stored (step S20). That is, the target velocity V calculated in the above-mentioned step S17, target range R, and target angle θ are stored. It is then checked whether the target is completed or not (step S21). That is, it is checked whether processing for all the targets is completed. In step S21, if the targets are not completed, current target number is changed to the next number and the process returns to step S16 to repeat the above-described processing. On the other hand, in step S21, if the targets are completed, the measurement processing is terminated.

As describe above, according to the radar apparatus according to Embodiment 1 of the present invention, the beat frequencies are the same because the signals of a down-chirp sequence or up-chirp sequence is transmitted/received, thus pairing does not need to be performed in the case of multiple targets. Also, radar observation with a short cycle time may be achieved.

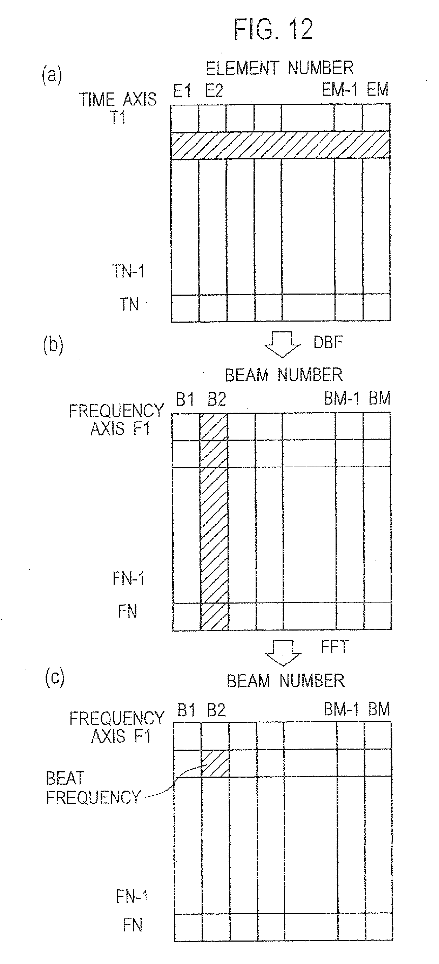

Note that the radar apparatus according to Embodiment 1 described above first performs: the Fast Fourier Transform (FFT), and then performs the DBF (Digital Beam Forming) to determine the beat frequency; however, as shown in FIG. 12, the radar apparatus may perform the DBF (Digital Beam Forming) first, and then perform the Fast Fourier Transform (FFT) to determine the beat frequency.

[Embodiment 2]

A radar apparatus according to Embodiment 2 of the present invention employs a system that combines phase monopulse with the MRAV system according to Embodiment 1 as described above. The configuration of the radar apparatus according to Embodiment 2 is the same as that of the radar apparatus according to Embodiment 1 shown in FIG. 7.

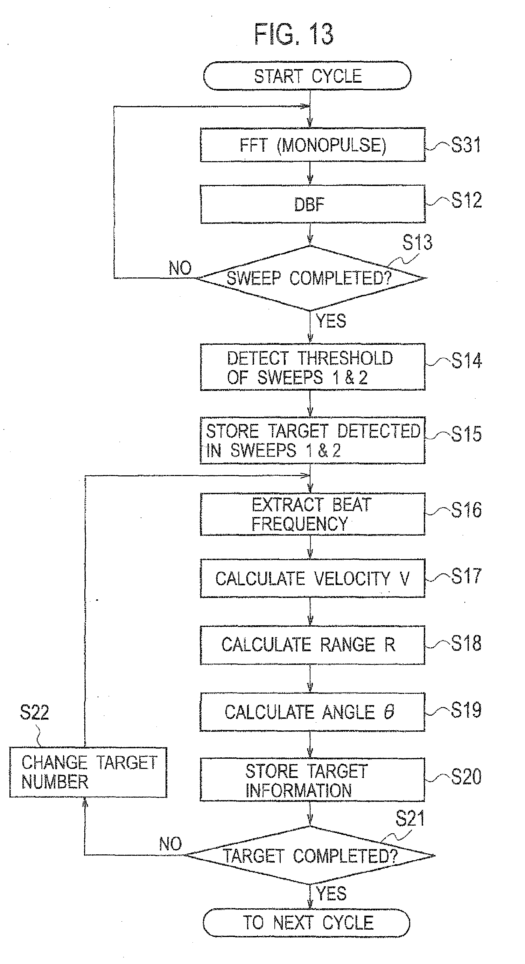

FIG. 13 is a flowchart showing operations of the radar apparatus according to Embodiment 2 of the present invention focused on processing for range, velocity, and angle measurement. Note that similar or corresponding measurement processing to those according to Embodiment 1 shown in the flowchart of FIG. 8 are labeled with the same reference numerals as those used in FIG. 8. In the following, different portions from those in Embodiment 1 are mainly described.

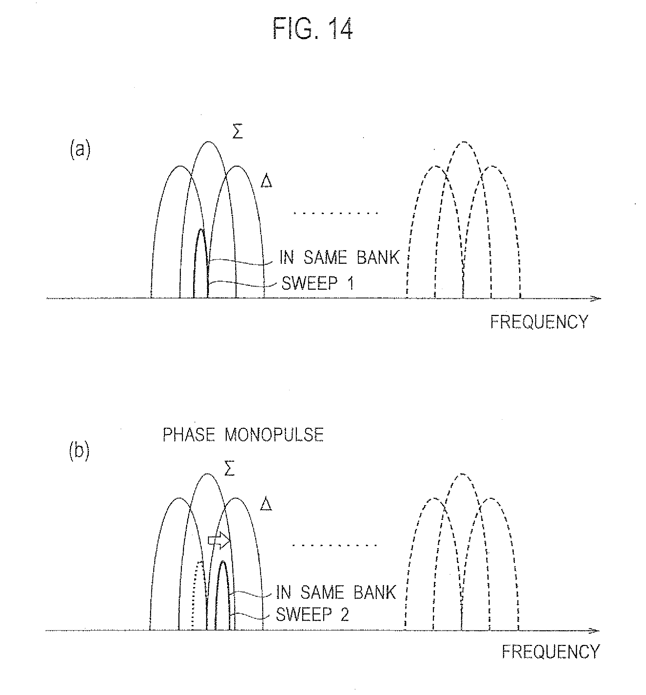

Especially, in the case where the number of sample points is smaller for the same PRF, the interval between frequency banks is increased, and the frequency precision is reduced. Thus, as a measure against this problem, the radar apparatus according to Embodiment 2 uses phase monopulse used in the angle axis for the frequency axis as shown in FIGS. 14 to 16 to observe frequencies in the bank with high precision. The phase monopulse (also referred to as phase comparison monopulse) is described in "Takashi Yoshida (editorial supervision), 'Radar Technology, revised version', the Institute of Electronics, Information and Communication Engineers, pp. 274 and 275 (1996)."

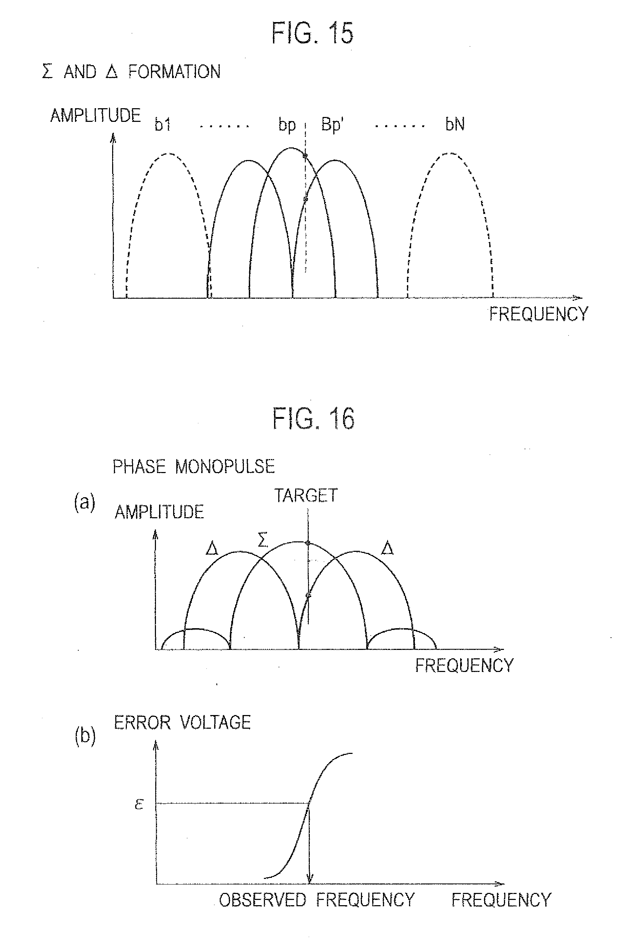

Monopulse measurement of the range and velocity calculates the error voltage εp of the following equation by using the $\Sigma$ (f) and $\Delta$ (f) of extracted frequency of the target as shown in FIG. 16.
Phase monopulse processing is performed by the FFT unit 32.

[Equation 6]

$$\varepsilon p = \mathrm{Re}\left[\frac{\sum(f)\cdot\Delta(f)^{*}}{\sum(f)\cdot\sum(f^{*})}\right] \ \dots \ (7)$$

where

$\Sigma$: summation (after multiplying reception signals 1 to N by a weight 1, the FFT is performed on the signals),
$\Delta$: subtraction (after multiplying reception signals 1 to N/2 by -1, and multiplying reception signals N/2 +1 to N by a weight 1, the FFT is performed on the signals),
*: complex conjugate, and
Re: real part.

Then, the reference value ε0 of the error voltage εp calculated by using frequency characteristics of pre-stored $\Sigma$ and $\Delta$ is arranged in a table (correspondence between ε0 and frequency f is made). The beat frequency fp is extracted from the above-mentioned observed value ε (step S16) by using the reference table. The velocity and range are then calculated using the extracted beat frequency fp (step S17, S18).

For the weight, in addition to -1 or 1, a weight such as a Taylor weight from a Taylor distribution may be used as a multiplier to reduce sidelobe. The Taylor distribution is described in, for example, "Takashi Yoshida (editorial supervision), 'Radar Technology, revised version', the Institute of Electronics, Information and Communication Engineers, pp. 274 and 275 (1996)."

As described above, according to the radar apparatus according to Embodiment 2 of the present invention, the beat frequency of each sweep signal is calculated with high precision based on the phase monopulse error voltage, thus the velocity and range may be calculated with high precision from a low velocity target to a high velocity target.

[Embodiment 3]

A radar apparatus according to Embodiment 3 of the present invention uses amplitude comparison monopulse instead of the phase monopulse of the radar apparatus according to Embodiment 2. The configuration of the radar apparatus according to Embodiment 3 is the same as that of the radar apparatus according to Embodiment 1 shown in FIG. 7. In the following, different portions from those in Embodiment 1 are mainly described. The amplitude comparison monopulse is described in "Takashi Yoshida (editorial supervision), 'Radar Technology, revised version', the Institute of Electronics, Information and Communication Engineers, pp. 274 and 275 (1996)."

The $\Sigma$ (f), $\Sigma$ (f-1), and $\Sigma$ (f+1) of the banks in the preceding and the following the extracted frequency of the target are used to compare the absolute values abs ($\Sigma$ (f-1)) and abs ($\Sigma$(f+1)), and the larger one is set as abs ($\Sigma$u).

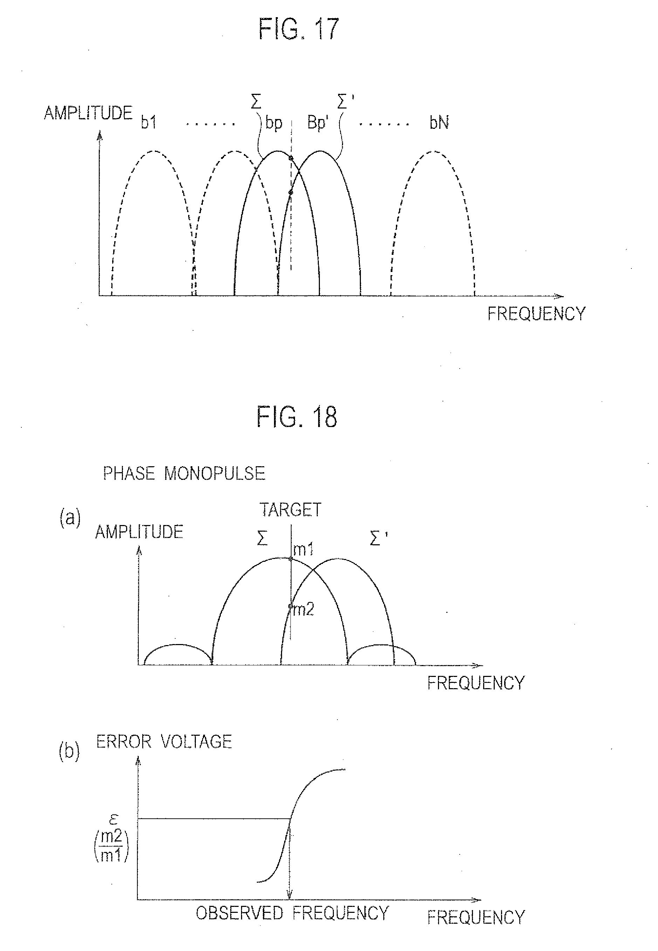

Then the error voltage Ea of the following, equation is calculated (see FIGS. 17 and 18). Amplitude monopulse, processing is performed by the FFT unit 32.

[Equation 7]

$$\varepsilon a = \mathrm{Re}\left[\frac{abs[\Sigma u]}{abs[\Sigma]}\right] \ \dots \ (8)$$

where

$\Sigma$: summation (after multiplying reception signals 1 to N by a weight 1, the FFT is performed on the signals), and
$\Sigma$u: either (f-1) or $\Sigma$(f+1) that has larger absolute value.

Then, the reference value ε0 of the error voltage εp calculated by using frequency characteristics of pre-stored absolute values abs (Σ) and abs (Σu) is arranged in a table (correspondence between ε0 and frequency f is made). The beat frequency fp is extracted based on the above-mentioned observed value ε by using the reference table. The velocity and range are calculated by using the extracted beat frequency fp.

As described above, according to the radar apparatus according to Embodiment 3 of the present invention, the beat frequency of each sweep signal is calculated with high precision based on the amplitude monopulse error voltage, thus the velocity and range may be calculated with high precision from a low velocity target to a high velocity target.

For the weight, similarly to the above-described radar apparatus according to Embodiment 2, in addition to -1 or 1, a weight such as a Taylor weight may be used as a multiplier to reduce sidelobe.

[Embodiment 4]

A radar apparatus according to Embodiment 4 of the present invention uses MUSIC system. The MUSIC system is described in "HARRY B. LEE, "Resolution Threshold of Beamspace MUSIC For Two Closely Spaced Emitters", IEEE Trans. ASSP, Vol. 38, No.9, Sept. (1990)."

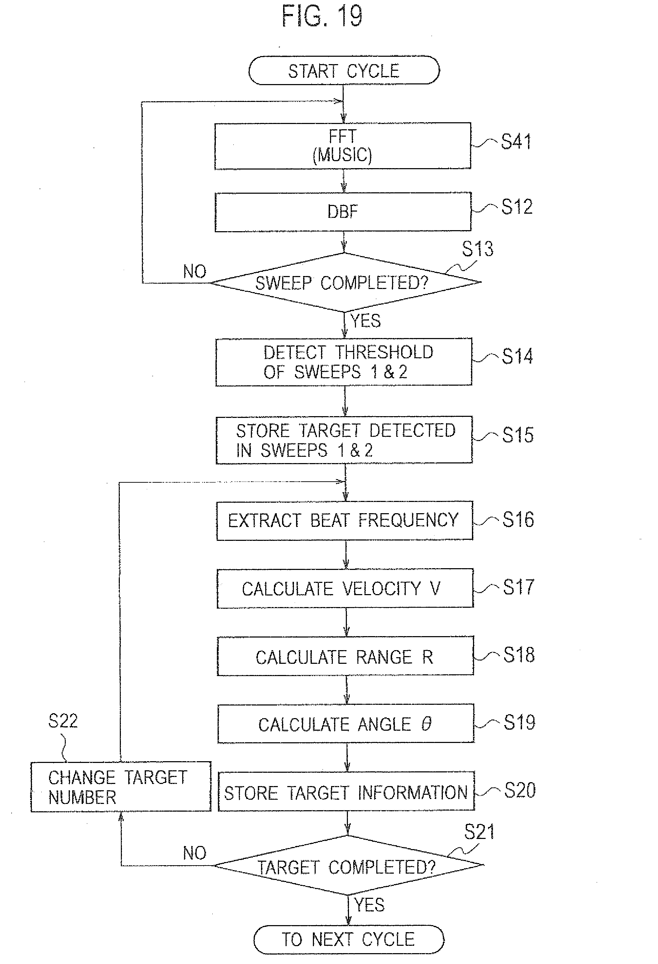

FIG. 19 is a flowchart showing operations of a radar apparatus according to Embodiment 4 of the present invention focused on processing for range, velocity, and angle measurement. The configuration of the radar apparatus according to Embodiment 4 is the same as that of the radar apparatus according to Embodiment 1 shown in FIG. 7. Note that in the flowchart shown in FIG. 19, similar or corresponding measurement processing to those according to Embodiment 1 shown in the flowchart of FIG. 8 are labeled with the same reference numerals as those used in FIG. 7. In the following, different portions from those in Embodiment 1 are mainly described.

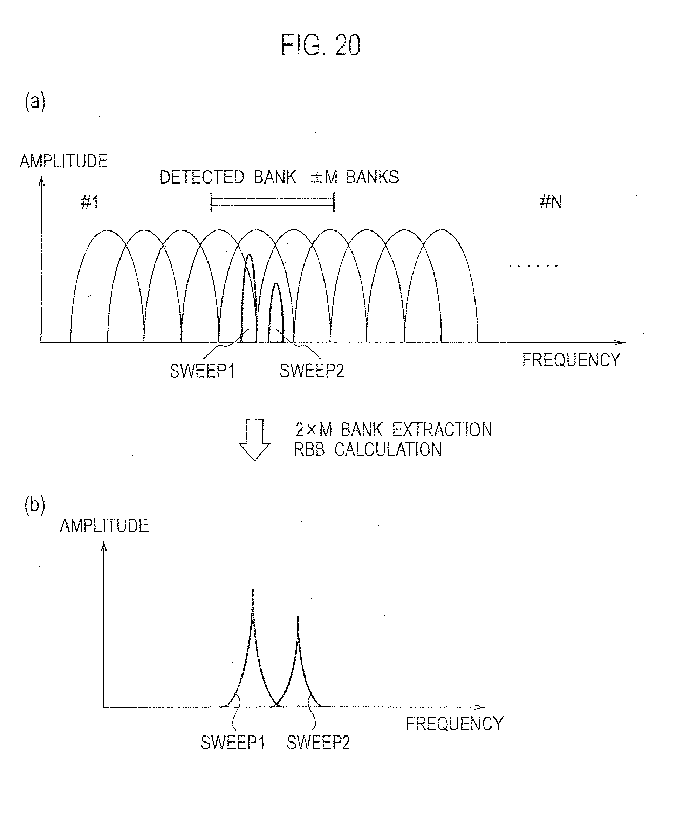

As shown in FIG. 20, the radar apparatus according to Embodiment 4 extracts the bank signals in the range of ±M banks of the bank at which Σ signal has a local maximum value when the FFT unit 32 applies the Fast Fourier Transform to the sweep signal, then applies Beamspace MUSIC to the bank signals to calculate the beat frequency with high precision. This radar apparatus calculates the ranges and velocities of Nt targets by calculating each velocity based on the difference between two beat frequencies (range difference) and the time difference, and further calculating the absolute range based on the beat frequencies and velocity.

The above-mentioned document describing the MUSIC system describes the beam in terms of the angle axis, however the beam may be extended to a frequency axis such as that obtained by Fast Fourier Transform (FFT).

The process is as follows. That is, as shown in FIG. 20(a), a target bank whose amplitude exceeds a predetermined threshold level is extracted based on the result of the Fast Fourier Transform (FFT). Then a correlation matrix Rbb is calculated from (2M+1) complex signals Xm in the range of ±M banks of the extracted target bank.

$$[\text{Equation 8}]$$

$$R_{bb} = X \cdot X^{H}$$

where

Rbb: correlation matrix,
X: column vector having (2M+1) elements of X-M to X0 to XM, and
H: complex conjugate transposition.

The eigenvectors Eb of the correlation matrix Rbb are then calculated. And an eigenvector EN with respect to noise is extracted from the eigenvectors Eb. By using the eigenvector EN and a steering vector w to search for the frequency, MUSIC spectrum is calculated by the following equation. As shown in FIG. 20(b), each beat frequency fp at which the spectrum has an extremum is read.

$$[\text{Equation 9}]$$

$$S_{music} = \frac{w^{H} \cdot w}{w^{H} \cdot E_{N} \cdot E_{N}^{H} \cdot w} \quad \cdots (9)$$

Smusic: MUSIC spectrum, and
w: steering vector of the frequency axis.

$$ws(n) = \exp(j \cdot 2\pi \cdot \frac{fs}{PRF} \cdot n)$$

$$w = FFT\left[ws\right]$$

where

ws: steering column vector having elements ws(n) on the time axis,
fs: search frequency,
PRF: repeat frequency,
n: 1 to N (N is a sample number),
FFT[]: Fourier Transform,
EN: eigenvector of the correlation matrix Rbb, and
H: conjugate transposition.

The velocity and range are then calculated by using the determined beat frequency fp. (steps S17, S18).

As described above, according to the radar apparatus according to Embodiment 4 of the present invention, the beat frequency of each sweep signal is calculated with high precision based on the FFT and the MUSIC processing, thus the velocity and range may be calculated with high precision from a low velocity target to a high velocity target.

[Embodiment 5]

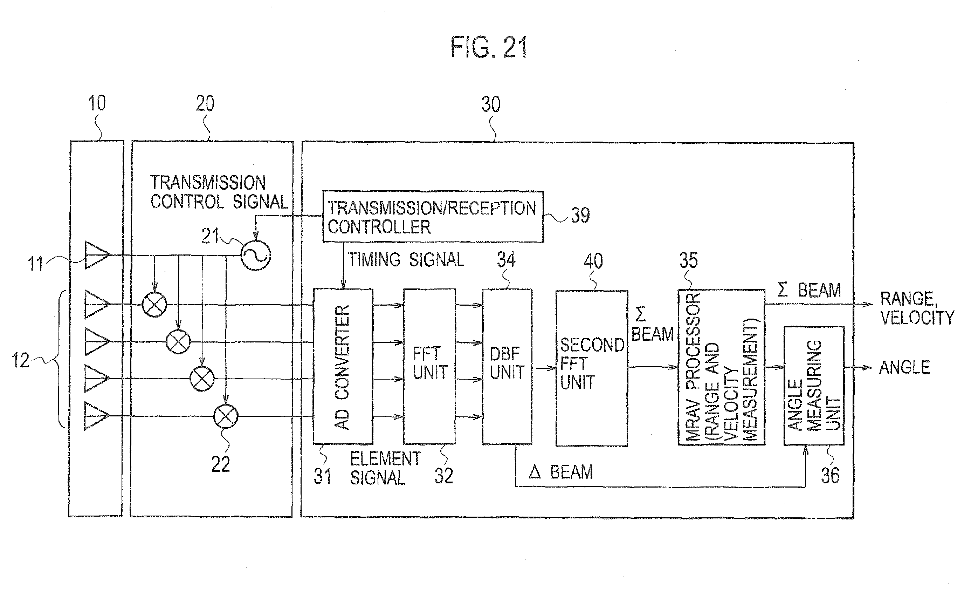

FIG. 21 is a block diagram showing a configuration of a radar apparatus according to Embodiment 5 of the present invention. This radar apparatus is configured by adding a second FFT unit 40 between the DBF unit 34 and the MRAV processor 35 of the signal processor 30a in the radar apparatus shown in FIG. 7. The second FFT unit 40 performs the Fast Fourier Transform on the signal outputted from the DBF unit 34.

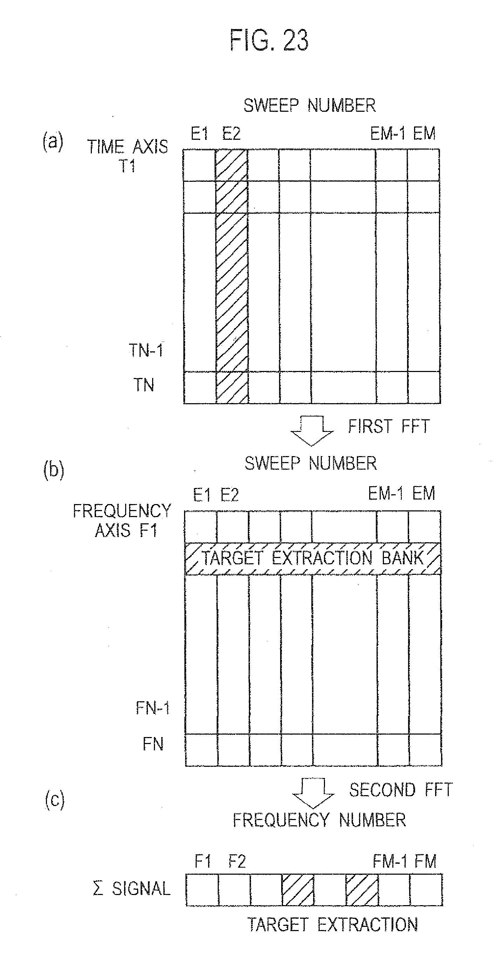

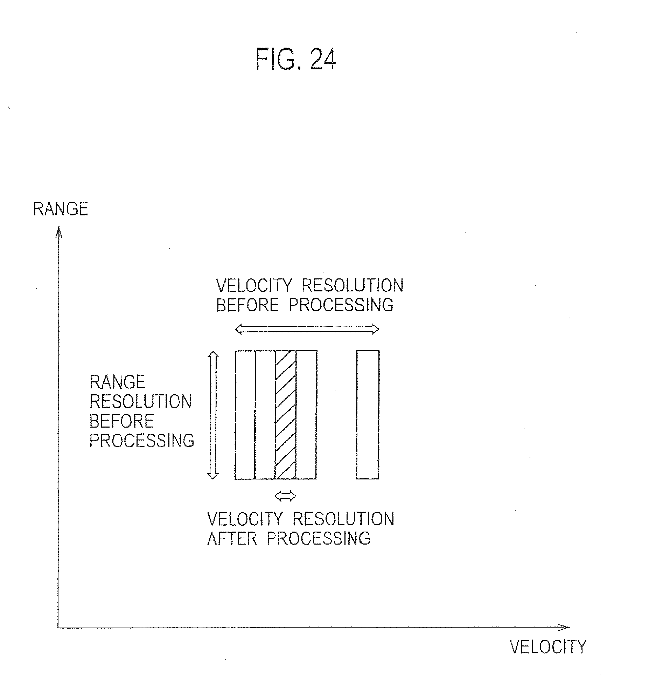

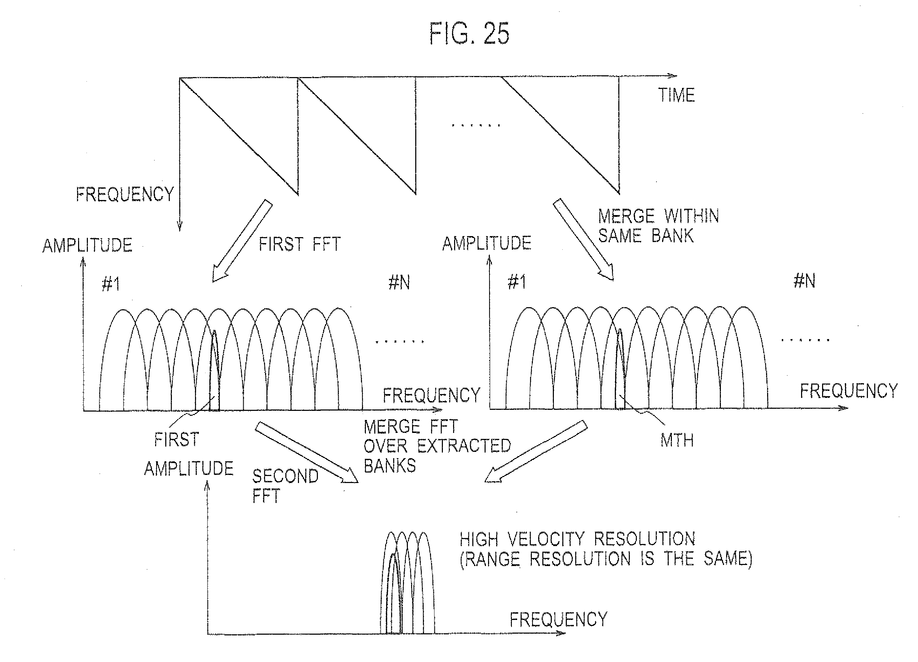

As shown in FIGS. 23 to 25, the radar apparatus according to Embodiment 5 employs a method of integration over multiple sweeps to improve the SN ratio and the frequency resolution in the limitation of the frequency band.

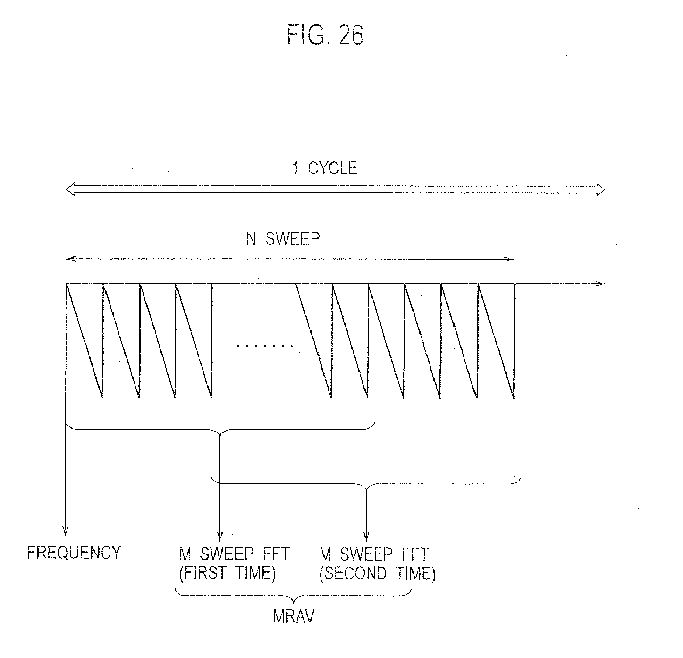

This radar apparatus transmits an FMCW modulated sweep signal N times (#1 to #N), and extracts local maximum values at Nt points from the result of the Fast Fourier Transform for each sweep. As shown in FIG. 26, the radar apparatus calculates the beat frequency of the bank signal having a local maximum value from the results of the Fast Fourier Transform for each of two sets of M sweeps, the results extracting banks having local maximum values from the FFT signals of the sweep of #1 to #N1 (M sweeps) and #N2 to #N (M sweeps). The radar apparatus calculates the ranges and velocities of Nt targets by calculating each velocity based on the difference between two beat frequencies (range difference) and the time difference, and further calculating the absolute range based on the beat frequency and velocity.

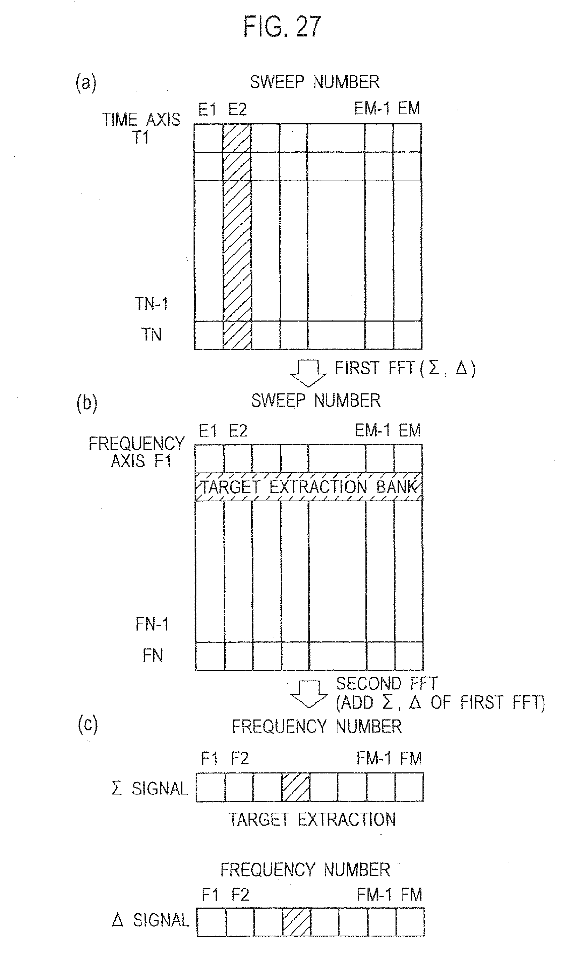

FIG. 27 shows each FFT situation of two sets of M sweeps. After the FFT is performed on the first N samples, the FFT is performed on the second M samples. At this point, in addition to the summation $\Sigma$ of N samples, the first FFT unit 32 calculates $\Delta$ (difference between 1 to N/2, and N/2+1 to N). In the second FFT unit 40, by the summation operation of the M samples of the $\Sigma$ and $\Delta$ from the results of the first FFT, the $\Sigma$ and $\Delta$ signals by the two step FFT are obtained. Subsequently, a phase monopulse operation may be performed to calculate the frequency fp with high precision.

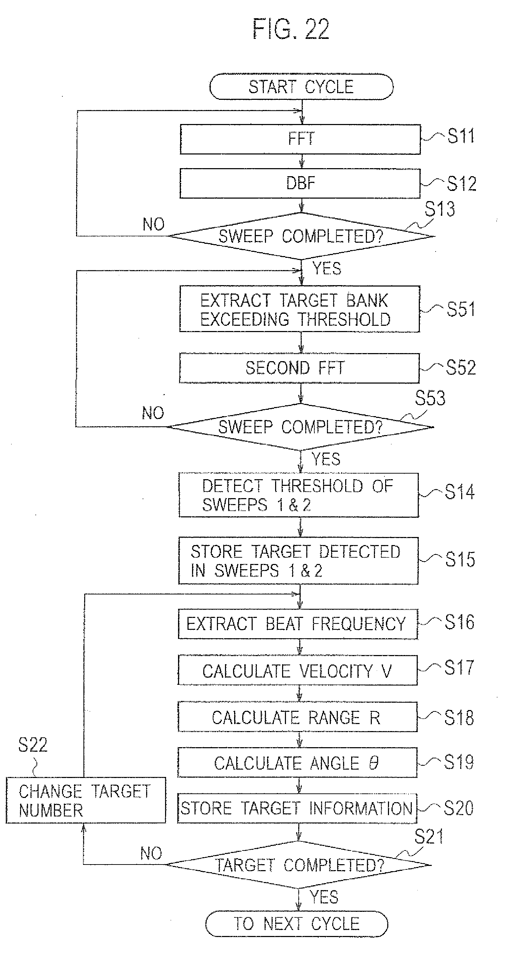

FIG. 22 is a flowchart showing operations of a radar apparatus according to Embodiment 5 of the present invention focused on processing for range, velocity, and angle measurement. Note that in the flowchart shown in FIG. 22, similar or corresponding measurement processing to those according to Embodiment 1 shown in the flowchart of FIG. 8 are labeled with the same reference numerals as those used in FIG. 8. In the following, different portions from those in Embodiment 1 are mainly described.

First, N sweeps are transmitted/received and the first FFT is performed on each sweep by the FFT unit 32 (steps S11 to S13). A target bank that exceeds a predetermined threshold is then extracted (step S51). The target bank of each sweep then undergoes the second FFT by the second FFT unit 39 (step S52). Subsequently, the beat frequency fp of a peak is read. And by using the calculated beat frequency fp, calculation of the velocity (step S17) and calculation of the range (step S18) are performed.

In the case of phase monopulse, processing is performed as follows. First, N sweeps are transmitted/received and the first FFT is performed on each sweep by the FFT unit 32 (steps S11 to S13). The $\Sigma$ signal and $\Delta$ signal are then calculated, and a target bank whose absolute value of the $\Sigma$ signal exceeds a predetermined threshold is extracted (step S51). The $\Sigma$ signal and $\Delta$ signal, of the target bank of each sweep then undergo the second FFT by the second FFT unit 40 (step S52). The frequency fp is then calculated by using the $\Sigma$ signal and $\Delta$ signal, and the range and velocity are calculated by using the calculated frequency fp.

As described above, according to the radar apparatus according to Embodiment 5 of the present invention, by further performing the second FFT over sweeps on the extracted bank signal of each sweep, the target positions and velocities can be extracted with even higher resolution than in the bank obtained by the first FFT only.

[Embodiment 6]

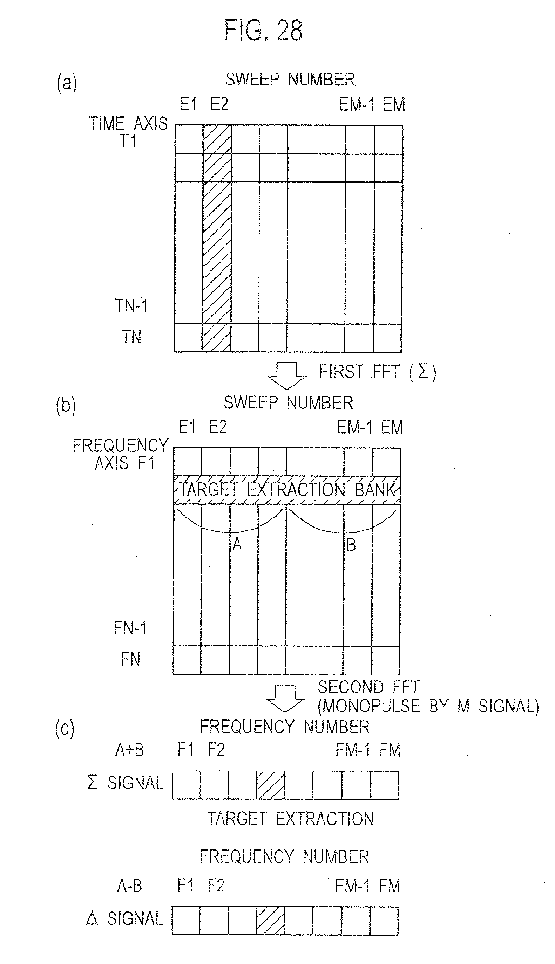

A radar apparatus according to Embodiment 6 of the present invention calculates, when respective local maximum values are calculated from two sets of M sweep signals in the radar apparatus according to Embodiment 5, the $\Sigma$ and $\Delta$ in the M sweep signals as shown in FIG. 28 to determine the beat frequency with high precision based on the monopulse error voltage.

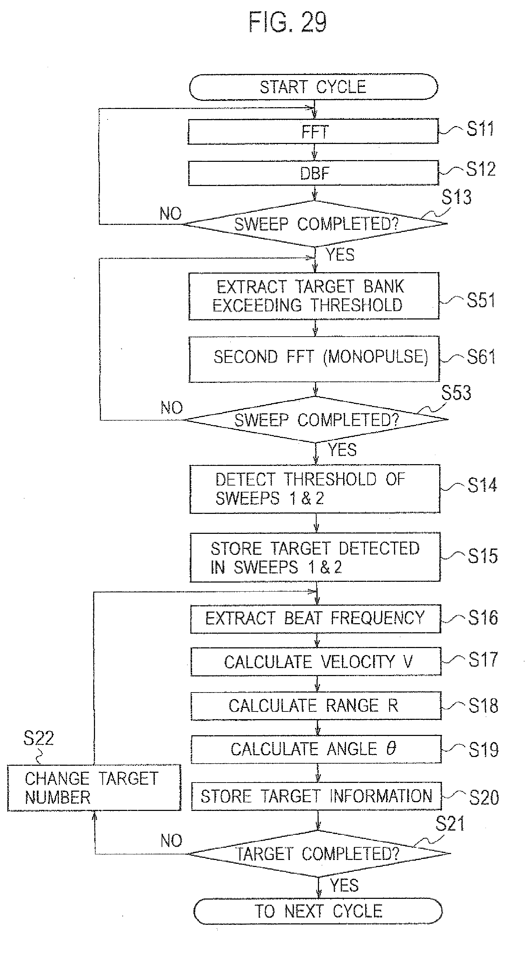

FIG. 29 is a flowchart showing operations of the radar apparatus according to Embodiment 6 of the present invention focused on processing for range, velocity, and angle measurement. Note that in the flowchart shown in FIG. 26, similar or corresponding measurement processing to those according to Embodiment 5 shown in the flowchart of FIG. 22 are labeled with the same reference numerals as those used in FIG. 22. In the following, different portions from those in Embodiment 5 are mainly described.

First, N sweeps are transmitted/received and the first FFT is performed on each sweep (steps S11 to S13). $\Delta$ target bank whose amplitude exceeds a predetermined threshold is extracted (step S51). The $\Sigma$ and $\Delta$ are calculated by the second FFT 40 unit using the target banks E1 to EM extracted in step S51. Then, the error voltage $\varepsilon p$ of the following equation is calculated by using the $\Sigma$ (f) and $\Delta$ (f) of extracted frequency of the target.

[Equation 10]

$$\varepsilon p = \mathrm{Re}\left[\frac{\Sigma \cdot \Delta^*}{\Sigma \cdot \Sigma^*}\right] \ \dots \ (10)$$

$\Sigma$: summation (after multiplying E1 to EM by a weight 1, the FFT is performed thereon),
$\Delta$: subtraction (after multiplying E1 to EM/2 by a-1, and multiplying EM/2+1 to EM by a weight 1, the FFT is performed thereon),
*: complex conjugate, and
Re: real part.

Then, the reference value $\varepsilon 0$ of the error voltage $\varepsilon p$ calculated by using frequency characteristics of pre-stored $\Sigma$ and $\Delta$ is arranged in a table (correspondence between $\varepsilon 0$ and frequency f is made). The frequency value fp is extracted from the above-mentioned observed value $\varepsilon$ (step S16) by using the reference table. And by using the calculated beat frequency fp, calculation of the velocity (step S17) and calculation of the range (step S18) are performed.

As described above, according to the radar apparatus according to Embodiment 6 of the present invention, by calculating the frequency with the phase monopulse as the second FFT is performed by the second FFT unit 40, the beat frequency can be extracted with high precision and the target position and velocity can be extracted with high precision.

For the weight, similarly to the above-described radar apparatus according to Embodiment 2, in addition to -1 or 1, a weight such as a Taylor weight may be used as a multiplier to reduce sidelobe.

[Embodiment 7]

A radar apparatus according to Embodiment 7 of the present invention, when respective local maximum values are calculated from M sweep signals in the radar apparatus according to Embodiment 6, calculates the $\Sigma$ and $\Sigma u$ in the

M sweep signals as shown in FIG. 28 to determine the beat frequency with high precision based on the monopulse error voltage.

First, N sweeps are transmitted/received and the first FFT is performed on each sweep (steps S11 to S13). A target bank whose amplitude exceeds a predetermined threshold is extracted (step S51). Then the $\Sigma$ (f), $\Sigma$ (f-1), and $\Sigma$ (f+1) of the banks in the preceding and the following the extracted frequency of the target are used to compare the absolute values abs ($\Sigma$ (f-1)) and abs ($\Sigma$ (f+1)), and the larger one is set as abs ($\Sigma$u).

And the error voltage εa of the following equation is calculated. This processing for the monopulse error voltage is performed by the second FFT unit 40 (step S61).

[Equation 11]

$$\varepsilon a = \frac{abs[\Sigma u]}{abs[\Sigma]} \quad \dots (11)$$

where

$\Sigma$: summation (after multiplying reception signals 1 to N by a weight 1, the FFT is performed on the signals), and
$\Sigma$u: either $\Sigma$ (f-1) or $\Sigma$ (f+ 1) that has larger absolute value.

Then, the reference value ε0 of the error voltage εp calculated by using frequency characteristics of pre-stored absolute values abs ($\Sigma$) and abs ($\Sigma$u) is arranged in a table (correspondence between ε0 and frequency f is made). The beat frequency fp is extracted based on the above-mentioned observed value ε by using the reference table. The velocity and range are calculated by using the extracted beat frequency fp.

As described above, according to the radar apparatus according to Embodiment 7 of the present invention, by calculating the frequency with the amplitude monopulse as the second FFT is performed by the second FFT unit 40, the beat frequency can be extracted with high precision and the target position and velocity can be extracted with high precision.

For the weight, similarly to the above-described radar apparatus according to Embodiment 2, in addition to -1 or 1, a weight such as a Taylor weight may be used as a multiplier to reduce sidelobe.

[Embodiment 8]

A radar apparatus according to Embodiment 8 of the present invention, when respective local maximum values are calculated from two sets of M sweep signals, calculates the beat frequency by performing the FFT and the MUSIC processing on the M sweep.

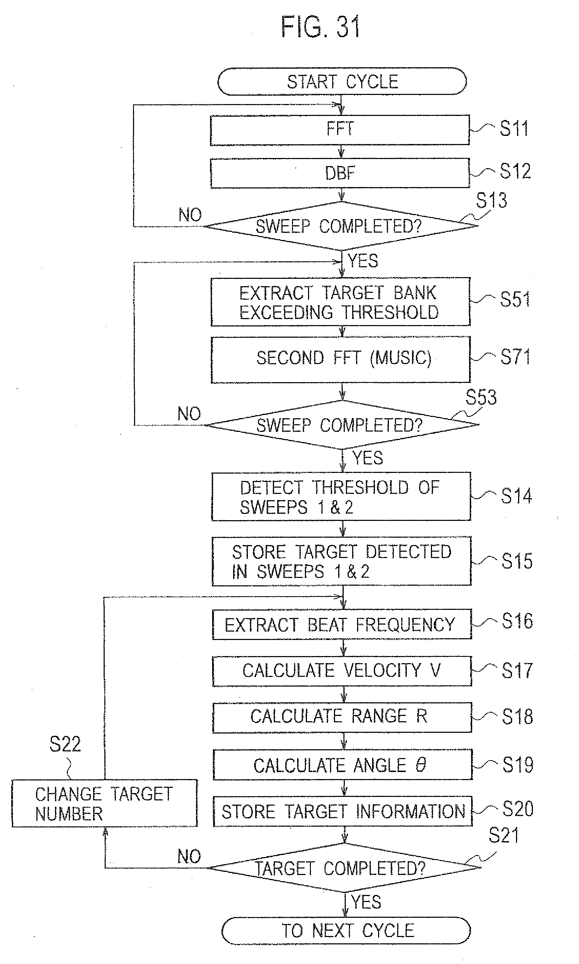

FIG. 31 is a flowchart showing operations of the radar apparatus according to Embodiment 8 of the present invention focused on processing for range, velocity, and angle measurement. Note that in the flowchart shown in FIG. 31, similar or corresponding measurement processing to those according to Embodiment 5 shown in the flowchart of FIG. 22 are labeled with the same reference numerals as those used in FIG. 22. In the following, different portions from those in Embodiment 5 are mainly described.

First, based on the result of the FFT in steps S11 to S13, a target bank whose amplitude exceeds a predetermined threshold is extracted (step S51). A correlation matrix Rbb is then calculated based on the complex signals Xm for M sweeps of the target bank.

[Equation 12]

$$R_{bb} = X \cdot X^{H}$$

where

Rbb: correlation matrix,
X: column vector having (M) elements of X1 to XM, and
H: complex conjugate transposition.

The eigenvectors Eb of the correlation matrix Rbb are then calculated. And an eigenvector EN with respect to noise is extracted from the eigenvectors Eb. By using the eigenvector EN and a steering vector w to search for the frequency, MUSIC spectrum is calculated by the following equation, and the beat frequency fp at which the spectrum has an extremum is read. The MUSIC processing is performed by the second FFT unit 39 (step S71).

[Equation 13]

$$S_{music} = \frac{w^H \cdot w}{w^H \cdot E_N \cdot E_N^H \cdot w} \quad \ldots (12)$$

Smusic: MUSIC spectrum, and
w: steering vector of the frequency axis

$$ws(n) = \exp(j \cdot 2\pi \cdot \frac{fs}{Fs} \cdot n)$$

$$w = FFT[ws]$$

where

ws: steering column vector having elements ws(n) on the time axis,
fs: search frequency,
Fs: 1/sweep time interval,
n: 1 to N (N is a sample number),
FFT[] : Fourier Transform,
EN: eigenvector of the correlation matrix Rbb, and
H: conjugate transposition.

Then by using the calculated beat frequency fp, calculation of the velocity (step S17) and calculation of the range (step S18) are performed.
As described above, according to the radar apparatus according to Embodiment 8 of the present invention, by calculating the frequency with the FFT and the MUSIC processing as the second FFT is performed by the second FFT unit 40, the beat frequency can be extracted with high precision and the target position and velocity can be extracted with high precision.

[Embodiment 9]

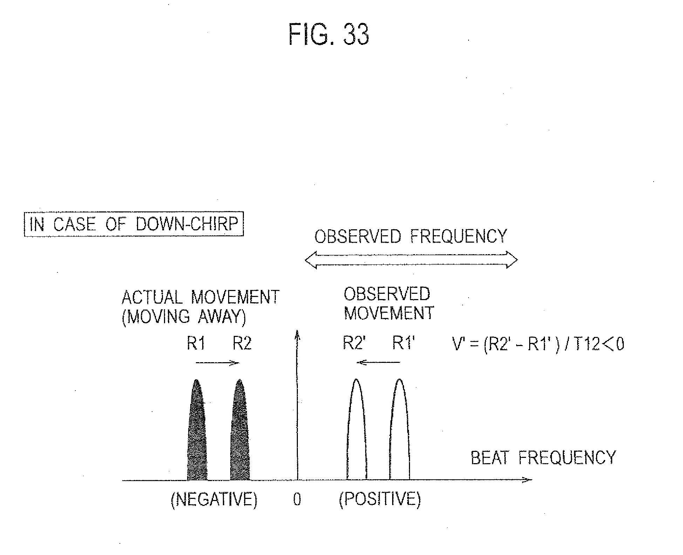

A radar apparatus according to Embodiment 9 of the present invention uses a system in which when the sweep signal is a real number signal (not a complex number signal), Complex Fourier Transform is performed on a sampled signal to extract a positive (or negative) signal from the beat frequencies. In this case, even if actual target has a negative (or positive) beat frequency, the beat frequency may be observed as a positive (or negative) frequency depending on the range and velocity of the target, thus the range and velocity may be miscalculated. In this case, it can be determined whether the beat frequency is negative (or positive) by the following principle.
According to the MRAV system, a velocity moving away is observed as v' = -v (R2<R1) < 0 (see FIG. 33). When the beat frequency is actually negative, observed frequency is given by

$$fp' = -2v/\lambda + 2R \cdot B/cT > 0.$$

Therefore,

$$fp' + 2v'/\lambda = 2R \cdot B/cT$$

From the third one of Equation (6), R' = (positive term)·(fp'+2v'/λ) = (positive term)×2R·B/cT<0.

Therefore, the range R' of the above equation is negative, and in this case, the velocity is determined to be the one moving away. If the velocity is determined to be negative, correct values of v, R may be obtained by reversing respective signs of v', fp', and R'.

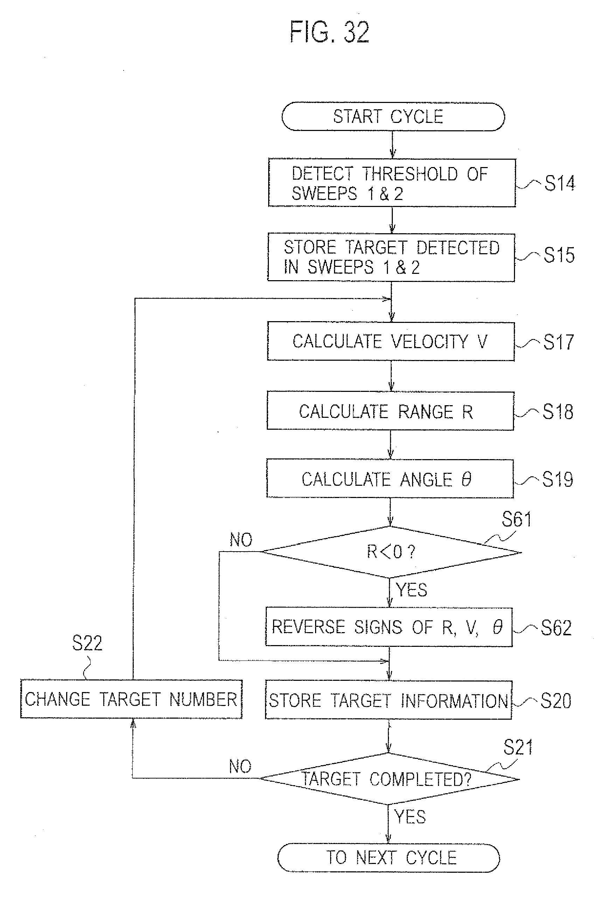

FIG. 32 is a flowchart showing operations of the radar apparatus according to Embodiment 9 of the present invention focused on processing for range, velocity, and angle measurement. Note that in the flowchart shown in FIG. 32, similar or corresponding measurement processing to those according to Embodiment 1 shown in the flowchart of FIG. 8 are labeled with the same reference numerals as those used in FIG. 8. In the following, different portions from those in Embodiment 5 are mainly described.

A negative velocity observation system according to the MRAV system is executed by the following process. After the difference between the ranges in two sweeps is observed, the target velocity V is calculated based on positional change and time (step S17). Then by using the target velocity V calculated in step S17, the range R is calculated from the beat frequency (step S18). The angle θ is then calculated (step S19). It is then checked whether the range R is negative (step S61). If the range R is negative in step S61, respective signs of the range R, velocity V, and angle θ are reversed by a sign reversing unit (not shown) (step S62). On the other hand, if the range R is not negative in step S61, processing in step S62 is skipped.

[Equations 14]

$$v = \frac{R2 - R1}{T12}$$

$$fp = -\frac{2v}{\lambda} - \frac{2R}{c} \cdot \frac{B}{T}$$

$$R = -\frac{c}{2} \cdot \frac{T}{B}\left(fp + \frac{2v}{\lambda}\right) \quad \dots (13)$$

if $R \le 0$
$R = -R$
$v = -v$

As described above, according to the radar apparatus of Embodiment 9 of the present invention, in the case where Complex Fourier Transform is performed on a real number sampling frequency to observe only positive (or negative) beat frequency and yet actual target signal has negative (or positive) beat frequency, the range, velocity, and angle can be converted so as to have correct signs after determining the correct signs by the sign of calculated range.

[Embodiment 10]

A radar apparatus according to Embodiment 10 of the present invention uses the system employed by Embodiment 1 or Embodiment 2 in the case where observation targets are present in a wide area from a short range to a long range, and velocity range is wide.

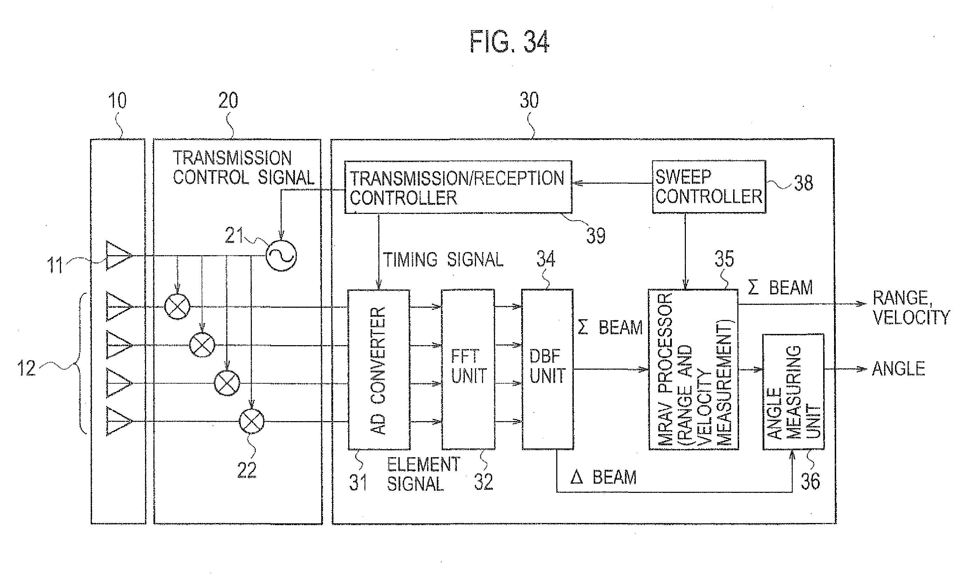

FIG. 34 is a system diagram showing a configuration of the radar apparatus according to Embodiment 10 of the present invention. This radar apparatus is configured by adding a sweep controller 41 to the radar apparatus according to Embodiment 1. The sweep controller 41 transmits a control signal to the transmission/reception controller 39 and the MRAV processor 35a to make them increase the slope of the sweep signal for a short range and decrease the slope of the sweep signal for a long range.

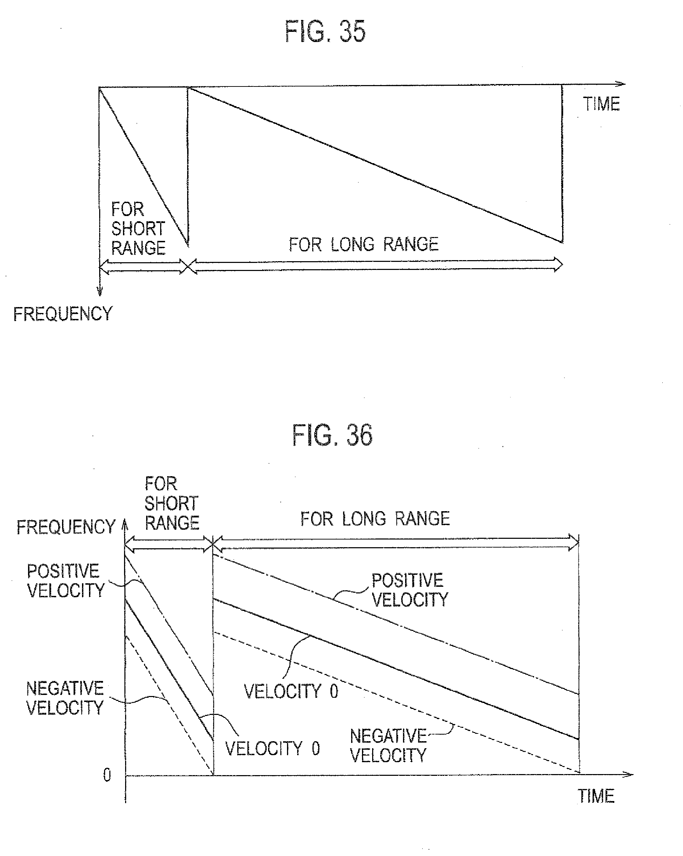

In the case of a short range target, a transmission signal becomes close to the DC on the beat frequency axis after the FFT, and tends to be easily influenced by noise due to a sneaking of the transmission signal to the receiving side. On the other hand, in the case of a long range target, frequencies are more separated from the DC components, thus the influence of noise tends to be smaller. Thus, the transmission/reception signals are divided into for a short range and for a long range as shown in FIGS. 35 and 36. For a short range, the frequency slope is set to be large, and for a long range, the frequency slope is set to be small.

When the band B and the PRF are the same, for a short range, the number of sample points is small; however, noise reduction effect is greater than the integral effect of the signals, thus desired SN ratio can be secured. For a long range, the number of sample points is large, thus the integral effect of the signals is great, and desired SN ratio can be secured.

As described above, the radar apparatus according to Embodiment 10 of the present invention is capable of transmitting/receiving a signal having a large integral number according to the range from a short range to a long range with a low noise frequency separated from the DC components on the beat frequency axis, thus radar observation with a high SN ratio can be achieved.

[Embodiment 11]

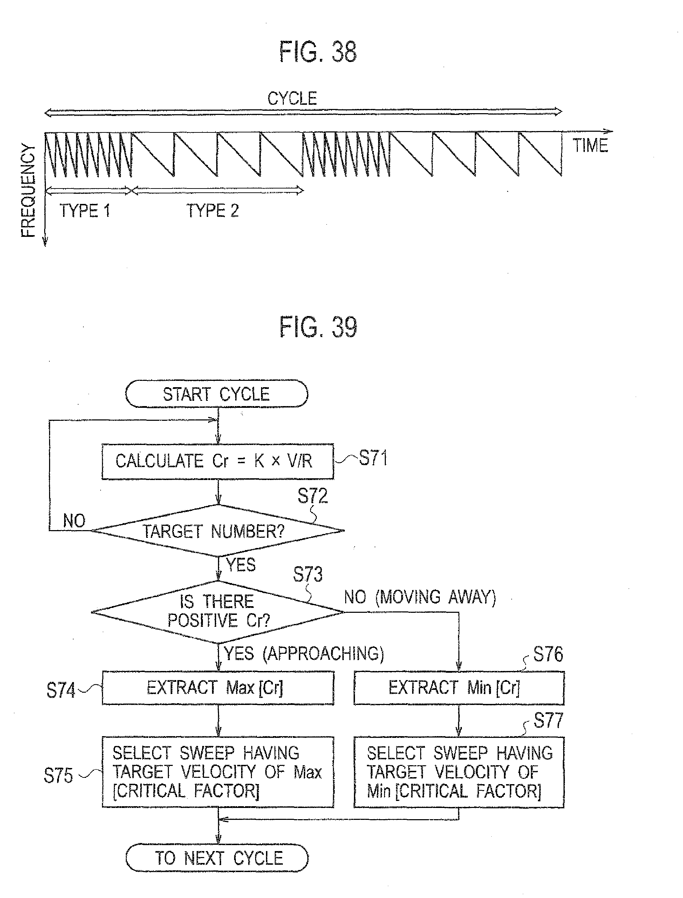

By setting a shorter time between sweeps for the case of faster target velocity, and a longer time between sweeps for the case of slower target velocity, the accuracy in velocity measurement can be improved. Thus, when the target velocities are unknown, by discriminating those targets with a high critical factor from others, for which higher velocity accuracy is desired, an optimal sweep needs to be selected focused on the targets. FIG. 38 shows an example of multiple transmission/reception sweep signals in the case of a short range and for a long range.

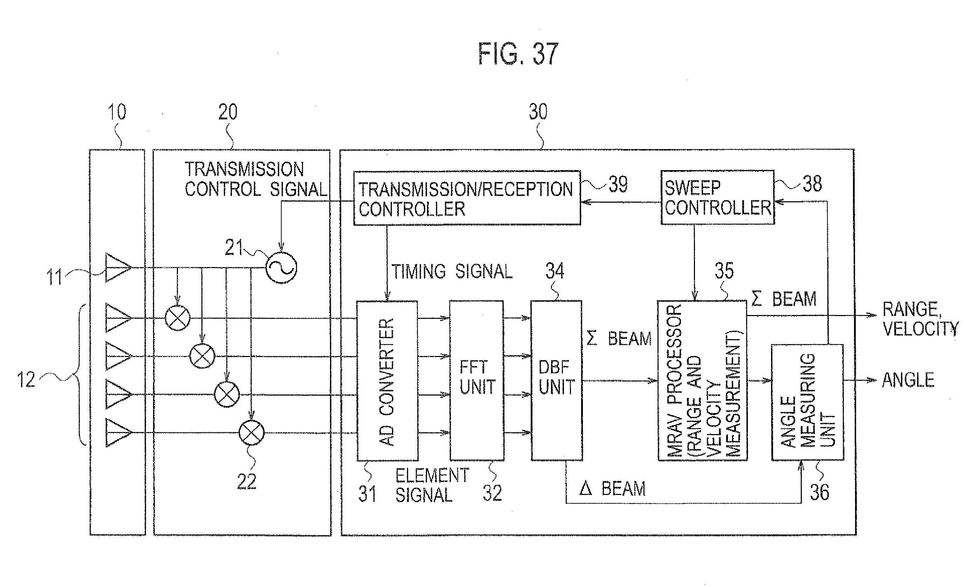

FIG. 37 is a system diagram showing a configuration of a radar apparatus according to Embodiment 11 of the present invention. This radar apparatus is configured to transmit an angle signal from the angle measuring unit 36 to the sweep controller 38 in the radar apparatus according to Embodiment 10.

As a weight indicator of critical factor, heavier weight may be placed on a target with a high relative velocity, approaching in a short range, and may be expressed by the following equation.

$$Cr = k \times V/R \ ... \ (14)$$

where

Cr: critical factor,
k: constant,
V: relative velocity, and
R: relative range.

FIG. 39 is a flowchart showing a process to select an optimal sweep interval (sweep number) using this critical factor. First, Cr = k(constant) X V/R is calculated for each target (steps S71, S72). Then from the calculated Cr, the maximum value of positive Cr and the minimum value of negative Cr are extracted (steps S74, S76). Subsequently, a sweep is selected so that accuracy of observation of the target corresponding to the extracted Cr reaches the maximum (steps S75, S76).

In order to maximize the accuracy of observation, the sweep Ts (or a sweep number close to the Ts) may be selected by the following equation, assuming that the target velocity is V and the frequency bank width is Δf.

[Equations 15]

$$\Delta R = -\frac{c}{2} \cdot \frac{T}{B} \cdot \Delta f$$

$$Ts = \frac{\Delta R}{V} \qquad ... \ (14a)$$

If only the absolute values of Cr are used for the selection, a positive velocity (the velocity for approaching), and a negative velocity (the velocity for moving away) are mixed in the selection. Since a positive velocity having higher critical factor cannot have higher priority in the case where the absolute value of a negative velocity is greater, processing is performed by the above-described process.

As described above, according to the radar apparatus according to Embodiment 11 of the present invention, velocity accuracy can be improved with a shorter time between sweeps for the case of faster target velocity, and a longer time between sweeps for the case of slower target velocity, thus when the target velocity is unknown, an optimal sweep according to the target may be selected by determining a target for which improved velocity accuracy is desired using its critical factor.

[Embodiment 12]

In the case of multiple targets, by periodically changing to a different sweep for every cycle rather than determining a critical factor, accuracy of the velocity and range may be improved for every target. A radar apparatus according to Embodiment 12 of the present invention periodically changes to a different sweep for every cycle.

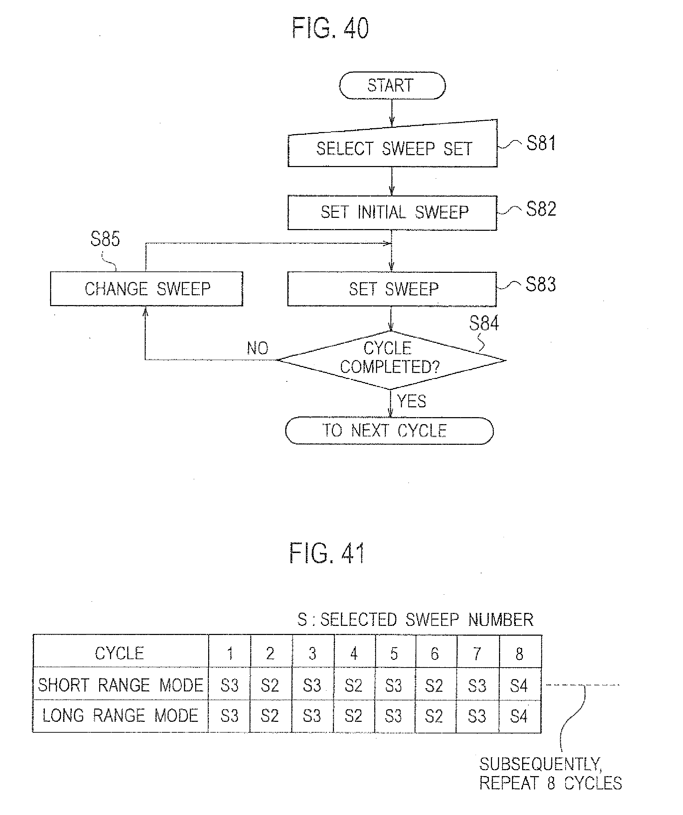

FIG. 40 is a flowchart showing processing of the radar apparatus according to Embodiment 12. This processing is performed by a sweep controller 38.

First, a sweep set is selected (step S81). Then an initial sweep is set (step S82). A sweep is then set (step S83). It is then checked whether the cycle is completed or not (step S84). In step S84, if the cycle is not completed, the sweep is changed (step S85). Subsequently, the process returns to step S83 to repeat the processing described above. On the other hand, if the cycle is completed in step S84, the processing is terminated, and the process proceeds with the processing of the next cycle.

FIG. 41 is a diagram showing an example of cycles. In this example, M cycles are set as one unit, and a sweep number is selected from repeating eight cycles of S3-S2-S3-S2-S3-S2-S3-S4.

As described above, according to the radar apparatus according to Embodiment 12 of the present invention, accuracy of the velocity and range may be improved for every target by periodically changing to a different sweep for every cycle.

[Embodiment 13]

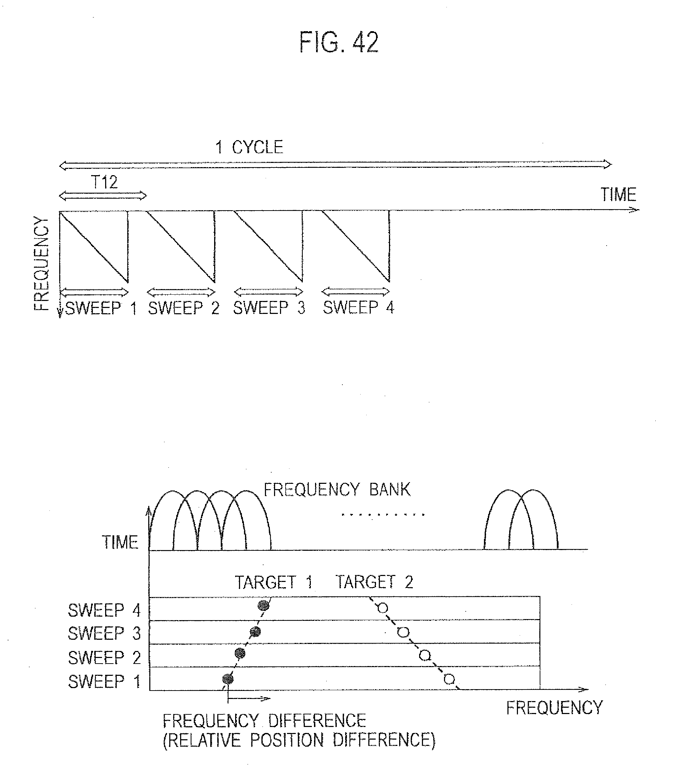

Since the MRAV system described above depends on the accuracy of a relative range difference (beat frequency) created from two sweeps, if the SN ratio is low, the velocity and range accuracy are reduced. In order to improve this situation, a radar apparatus according to Embodiment 13 of the present invention uses M sets of multiple sweep signals to obtain a smoothing effect as shown in FIG. 42. The configuration of the radar apparatus according to Embodiment 13 is the same as that of the radar apparatus according to Embodiment 10 shown in FIG. 34.

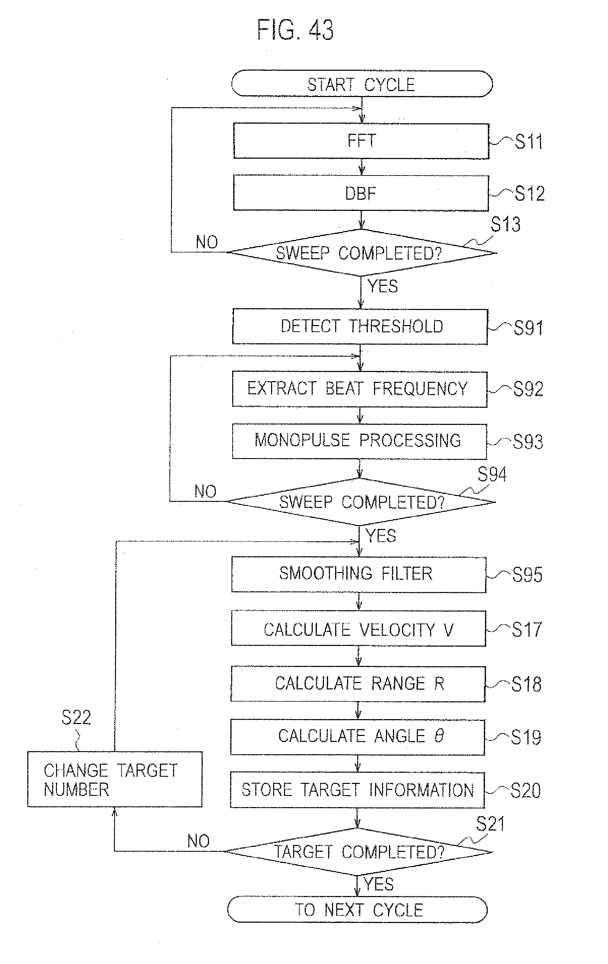

FIG. 43 is a flowchart showing processing of the radar apparatus according to Embodiment 13. In this processing, when the maximal value of each sweep signal from M sweep signals is calculated, the beat frequency fp is calculated by the phase monopulse of M sweeps (amplitude monopulse and MUSIC) (steps S91 to S94). The result of conversion to relative range by Equations (5) defines R (m, n) (m is sweep number, n is a target number).

Smoothing is performed by a smoothing filter over S (m; n) sweeps (step S95), and after the velocity is calculated by using this result, the relative range is calculated. (steps S17 and S18). The processing in steps S91 to S94, step S95, and steps S17 and S18 is performed by the MRAV processor 35.

[Equations 16]

$$Rs(1, n) = R(1, n)$$

$$Rs(m, n) = R(m) + \alpha(R(m) - Rs(m\text{-}1)) \ldots (15)$$

where

Rs: smooth range,
m: sweep number (m=l to M),
n: target number, and
$\alpha$: constant.

The range R and velocity V are calculated from simultaneous equations based on fp and V.

[Equations 17]

$$v = \frac{Rs(M) - Rs(1)}{T12}$$

$$fp = -\frac{2v}{\lambda} - \frac{2R}{c} \cdot \frac{B}{T} \quad \dots (16)$$

$$R = -\frac{c}{2} \cdot \frac{T}{B} (fp + \frac{2v}{\lambda})$$

    V: velocity,
    T1M: time interval between the sweeps 1 and M,
    fp: beat frequency,
    $\lambda$: wave length,
    B: band, and
    T: sweep time.

The smoothing filter is only used to obtain a smoothing effect, and other filter such as a Least Square filter may also be used. Although the first and the Mth sweeps are used for calculating the velocity, other sweep interval may also be used as long as a smoothing effect can be obtained.

As described above, according to the radar apparatus according to Embodiment 13 of the present invention, a relative range difference for calculating the velocity is observed by multiple sweeps (multiple time intervals) and is smoothed. Accordingly, even if an error is present in the relative range difference, the influence of the error is reduced, and the accuracy in measuring the velocity and range can be improved.

[Embodiment 14]

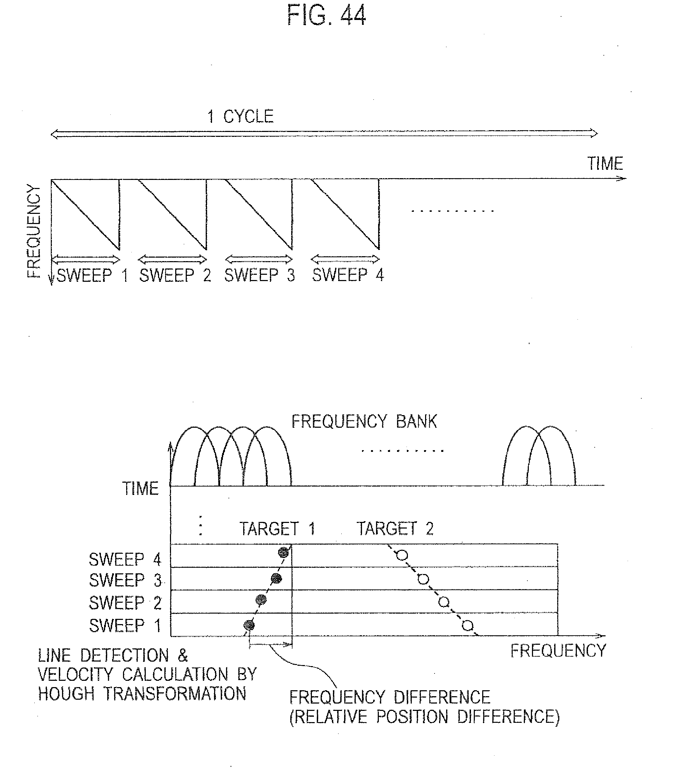

The MRAV system described above depends on the accuracy of a relative range difference (beat frequency) from two sweeps. Thus, if the SN ratio is low, the velocity and range accuracy are reduced. In order to improve this situation, a radar apparatus according to Embodiment 14 of the present invention uses M sets of multiple sweep signals and performs the Hough transformation to obtain an integration effect as well as a smoothing effect as shown in FIG. 44. The configuration of the radar apparatus according to Embodiment 14 is the same as that of the radar apparatus according to Embodiment 10 shown in FIG. 36.

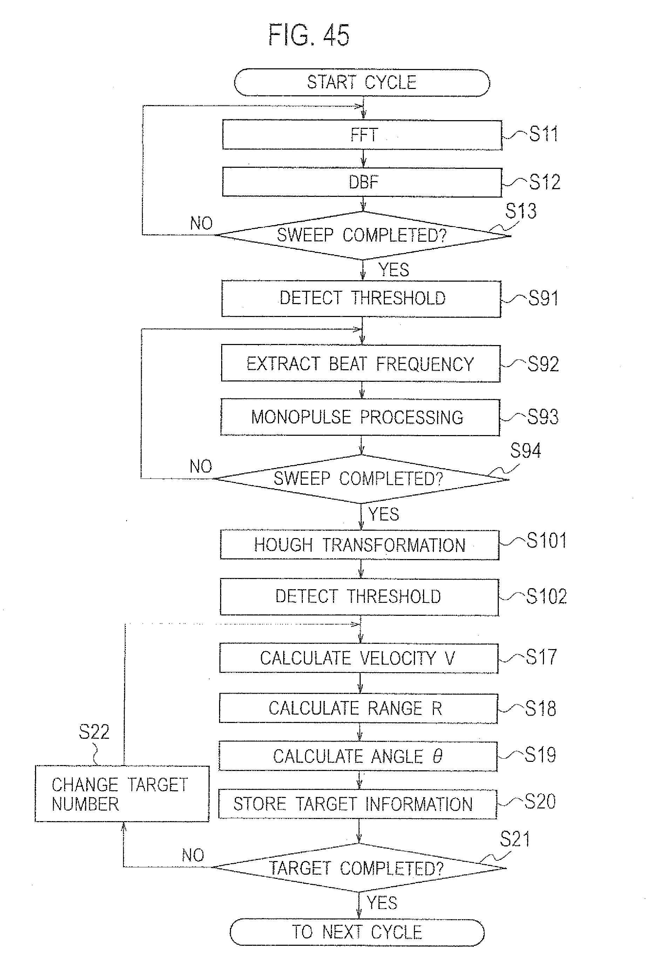

FIG. 45 is a flowchart showing processing of the radar apparatus according to Embodiment 14. In this processing, when the maximal value of each sweep signal from M sweep signals is calculated, the beat frequency fp is calculated by the phase monopulse of M sweeps (amplitude monopulse, MUSIC), and is set as F (sweep number m, target number n) (steps S92 to S94).

And F (m, n) is used to perform the Hough transformation by the beat frequency-sweep axis (step S101) so that local maximum values (pp, θp) (p=1 to P) exceeding a predetermined threshold is extracted (step S102). Then a line is calculated by the following relational equation for every local maximum value, and the beat frequency fp is calculated from the intersection between this line and the beat frequency axis X.

[Equation 18]

$$\rho p = X\cos\theta p + Y\sin\theta p \quad \dots (17)$$

where

X: beat frequency, and
Y: sweep number.

The beat frequency fp is then converted into a relative range using Equations (5), and the velocity Vp is calculated by the following equation (step S17).

$$Vp = (RM - R1)/(TM - T1)$$

where

R1, RM: relative ranges on the X-axis (beat frequency axis) from the lines corresponding to the sweep 1 and sweep M, and
T1, TM: times of the starting points of the sweep 1 and the sweep M.

Subsequently, by using the beat frequency fp and velocity Vp, the range is calculated from the following equation (step S18). The processing of steps S92 to S94, steps S101 and 102, and steps S17 and S18 are performed by the MRAV processor 35.

[Equations 19]

$$fp = -\frac{2vp}{\lambda} - \frac{2R}{c} \cdot \frac{B}{T}$$

$$R = -\frac{c}{2} \cdot \frac{T}{B} (fp + \frac{2Vp}{\lambda}) \quad \dots (18)$$

Vp: velocity,
fp: beat frequency,
$\lambda$: wave length,
B: band, and
T: sweep time.

Although the beat frequency axis-sweep axis has been used when the Hough transformation is performed, the Hough transformation may be used on the relative range-sweep axis after the beat frequency is converted to a relative range using Equations (5).

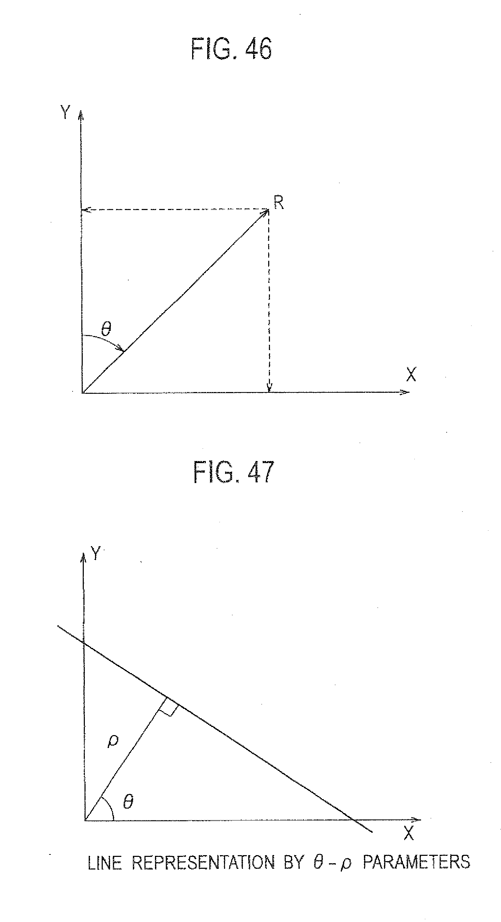

Here, general Hough transformation is described. The Hough transformation is the technique of extracting a line from an image. A line on the X-Y plane expressed in the polar coordinate has following equation as shown in FIGS. 46 and 47.

[Equation 20]

$$\rho = X\cos\theta + Y\sin\theta$$

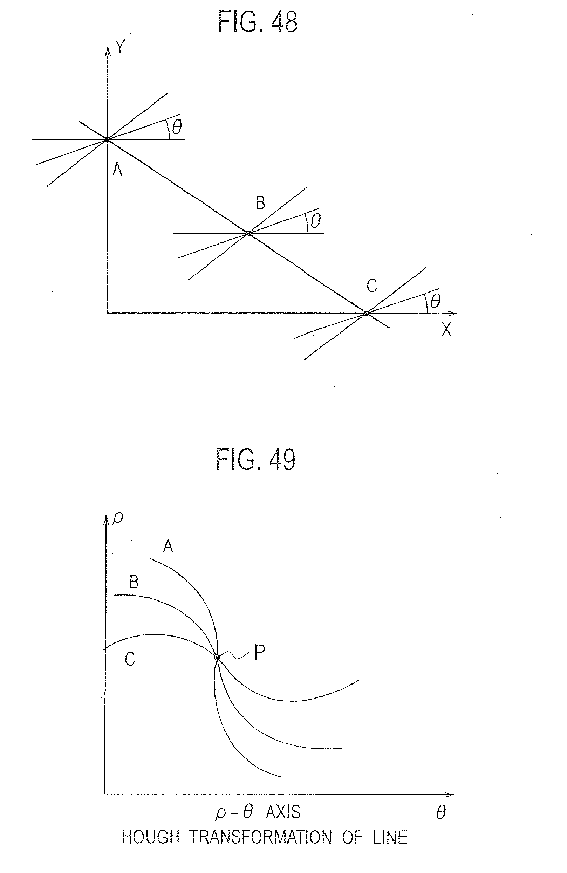

By the above equation, the line, $\rho$, and $\theta$ uniquely correspond. Next, as shown in FIG. 48, a consideration is given on three points A, B, and C on the line. A set of curves passing through each point with sequentially changed angle $\theta$, when expressed on $\rho$-$\theta$ axis, is as shown in FIG. 49. Three curves intersect at a certain point ($\rho$0, $\theta$0), which represents a common line on the X-Y axis. Based on the above principle, the steps of the Hough transformation are summarized as follows.

(1) A matrix to store numerical values on the ρ-θ axis is reserved.

(2) Centered on an observed value on the X-Y axis, ρ on the ρ - θ axis is calculated for θ sequentially changed by Δθ, and 1 is added to the element at the corresponding line, column of the matrix. This processing is repeated for all of the observed values.

(3) A local maximum point (ρq, θq) (q=1 to Q) is extracted from the matrix.

By the above steps, Q lines can be extracted from (ρq, θq).
As described above, according to the radar apparatus according to Embodiment 15 of the present invention, by observing relative range differences for calculating velocities by multiple sweeps (multiple times) to perform the Hough transformation on the relative range difference-swcep time axis, an integration effect over multiple sweeps is obtained to improve the signal detection performance. Also, by calculating the slope of each line extracted by the Hough transformation to determine the velocity, then later the range, even if an error is present in the relative range difference, the influence of the error is reduced, and the accuracy in measuring the velocity and range can be improved.

[Embodiment 15]

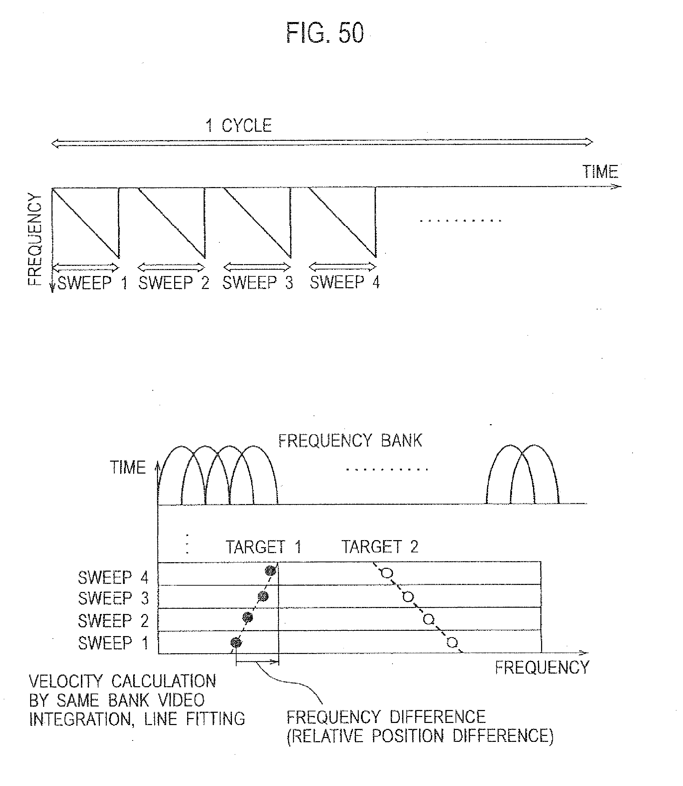

Since the MRAV system described above depends on the accuracy of a relative range difference (beat frequency) from two sweeps, if the SN ratio is low, the velocity and range accuracy are reduced. In order to improve this situation, a radar apparatus according to Embodiment 15 of the present invention uses M sets of multiple sweep signals and performs amplitude integration to obtain an integration effect as well as a smoothing effect as shown in FIG. 50. The configuration of the radar apparatus according to Embodiment 15 is the same as that of the radar apparatus according to Embodiment 10 shown in FIG. 34.

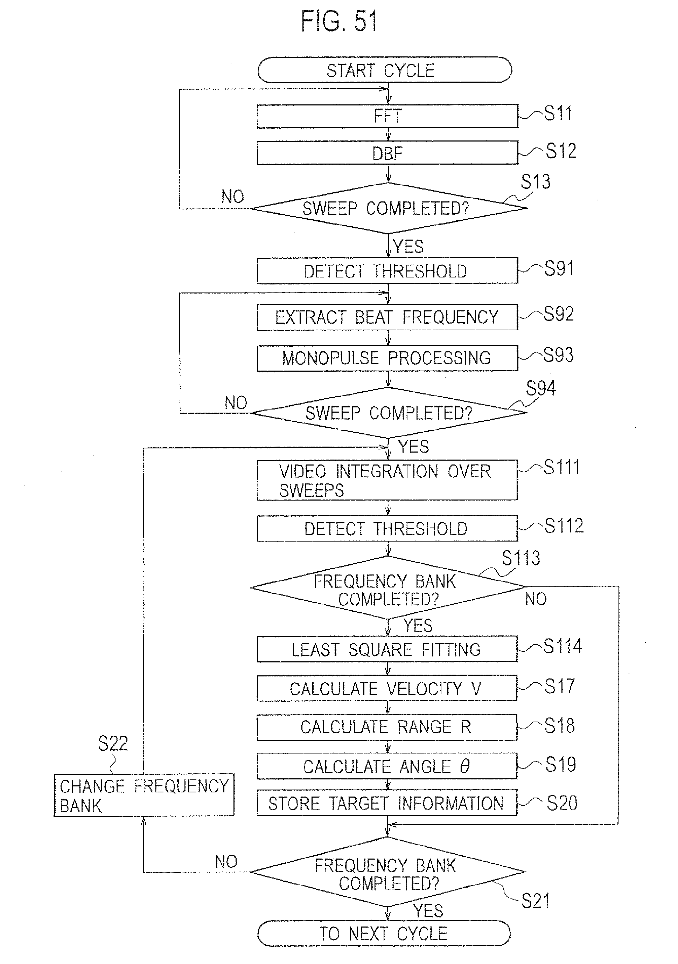

FIG. 51 is a flowchart showing processing of the radar apparatus according to Embodiment 15. In this processing, when the maximal value of each sweep signal from M sweep signals is calculated, the beat frequency fp (corresponding to the relative range Rp by Equations (5)) is calculated by the phase monopulse of M sweeps (amplitude monopulse, MUSIC), and is set as F (sweep number m, target number n) (steps S92 to S94).
And F (m, n) is used to perform amplitude integration (video integration) for every frequency bank (step S111) on the beat frequency-sweep axis so that frequency banks fb exceeding a predetermined threshold is extracted (step S112).
Subsequently, for the frequency bank fb, using F (m, n) for the sweep exceeding the threshold, the least square line with respect to the sweep time m and the relative range Rp is calculated (step S114), which may be expressed as below, then the velocity is calculated from the slope of the least square line (step S17).
$$Rp = a{\cdot}t + b$$

where

Rp: relative range,
t: starting time of sweep,
a: line slope (corresponding to the velocity Vp), and
b: constant.

Subsequently, by using the beat frequency fp and velocity Vp, the range is calculated from the following equation (step S18). The processing of steps S92 to S94, steps S111 to 114, and steps S17 and S18 are performed by the MRAV processor 35.

[Equations 21]

$$fp = -\frac{2Vp}{\lambda} - \frac{2R}{c} \cdot \frac{B}{T}$$

$$R = -\frac{c}{2} \cdot \frac{T}{B} (fp + \frac{2Vp}{\lambda}) \quad \dots (19)$$

Vp: velocity,
fp: beat frequency,
λ: wave length,
B: band, and
T: sweep time.

For fp used in Equations (19), an average value in each sweep may be used.

As described above, according to the radar apparatus according to Embodiment 15 of the present invention, by observing relative range differences for calculating velocities by multiple sweeps (multiple times) to perform the video integration on the relative range difference-sweep time axis, an integration effect over multiple sweeps is obtained to be able to improve the signal detection performance. By calculating the slope of the line extracted by fitting the least square line, the range is calculated, then later the velocity is calculated. Thereby, even if an error is present in the relative range difference, the influence of the error is reduced, and the accuracy in measuring the velocity and range can be improved.

[Industrial Applicability]

The present invention may be used for a radar apparatus that measures the range to a vehicle and the velocity of the vehicle.

[Reference Signs List]

| | |
|---|---|
| 10 | antenna |
| 11 | antenna transmitting element |
| 12 | antenna receiving element |
| 20 | transmitter/receiver |
| 21 | transmitter |
| 22 | mixer |
| 30, 30a | signal processor |
| 31 | AD converter |
| 32 | FFT unit |
| 34 | DBF unit |
| 35, 35a | MRAV processor (range and velocity measurement) |
| 36 | angle measuring unit |
| 37 | up/down sequence extractor |
| 38 | sweep controller |
| 39 | transmission/reception controller |
| 40 | second FFT Unit |

**Claims**

1. A radar apparatus comprising:

a transmitter/receiver that transmits an FMCW modulated sweep signal M times;
an FFT unit that performs Fast Fourier Transform on the M sweep signals received in response to transmission from the transmitter/receiver; and
an MRAV processor configured so that, when a maximum value of each sweep signal is calculated from the M sweep signals obtained by the Fourier Transform performed by the FFT unit, the MRAV processor performs: amplitude integration on beat frequency-sweep axis in a sweep direction for each of beat frequencies by using F (sweep number, target number) resulting from calculation of the beat frequencies by phase monopulse, amplitude monopulse, or MUSIC of M sweeps; calculates a least square line with respect to a relative range and a sweep time of a sweep number exceeding a predetermined threshold sweep for each frequency bank exceeding the predetermined threshold; calculates a target velocity from a slope of the least square line; and calculates a target range.

2. The radar apparatus according to claim 1, wherein, when the sweep signals undergo Fast Fourier Transform, the MRAV processor calculates the beat frequencies with high precision within banks based on: a monopulse error signal calculated for a bank at which $\sum$ signal has a local maximum value by using a result of performing Fast Fourier Transform on two sequences of the $\sum$ signal and a $\Delta$ signal; a monopulse error signal calculated based on $\sum$ and $\sum u$, $\sum u$ being a greater signal of banks adjacent to the bank at which the $\sum$ signal has a local maximum value; or a monopulse error signal calculated by performing FFT and MUSIC system on bank signals extracted in a range of $\pm$M banks of the bank at which the $\sum$ signal has a local maximum value.

3. A radar apparatus comprising:

a transmitter/receiver that transmits an FMCW modulated sweep signal at least twice;
an FFT unit that performs Fast Fourier Transform on the at least two sweep signals received in response to transmission from the transmitter/receiver; and
an MRAV processor that calculates ranges and velocities of multiple targets by calculating beat frequencies corresponding to at least two sweeps by the transmitter/receiver based on the at least two sweep signals obtained by the Fourier Transform performed by the FFT unit, calculating velocities based on a frequency difference and a time difference of the calculated beat frequencies, and calculating ranges based on the calculated velocities and beat frequencies.

4. The radar apparatus according to claim 3, wherein, when the sweep signals undergo Fast Fourier Transform, the MRAV processor calculates the beat frequencies with high precision within banks based on: a monopulse error signal calculated for a bank at which $\sum$ signal has a local maximum value by using a result of performing Fast Fourier Transform on two sequences of the I signal and a $\Delta$ signal; a monopulse error signal calculated based on $\sum$ and $\sum u$, $\sum u$ being a greater signal of banks adjacent to the bank at which the $\sum$ signal has a local maximum value; or a monopulse error signal calculated by performing FFT and MUSIC system on bank signals extracted in a range of $\pm$M banks of the bank at which the $\sum$ signal has a local maximum value.

5. The radar apparatus according to claim 3, further comprising a second FFT unit that performs Fast Fourier Transform on an output of the FFT unit, wherein
the transmitter/receiver transmits the FMCW modulated sweep signal N times (#1 to #N), and
the MRAV processor extracts a local maximal value based on a result of Fast Fourier Transform on each sweep, and calculates a beat frequency of the bank signal having a local maximum value from results of Fast Fourier Transform by the second FFT unit for each of two sets of M sweeps, the Fast Fourier Transform being performed to extract banks having local maximum values from FFT signals of sweep of #1 to #N1 (M sweeps) and #N2 to #N (M sweeps).

6. The radar apparatus according to claim 3, wherein, when calculating each local maximum value from two M sweep signals, the MRAV processor calculates $\sum$ and $\Delta$ of M sweeps, and calculates the beat frequency with high precision from a monopulse error voltage.

7. The radar apparatus according to claim 3, wherein, when calculating each local maximum value from two M sweep signals, the MRAV processor calculates $\sum$ and $\sum u$ of M sweeps, and calculates the beat frequency with high precision from a monopulse error voltage.

8. The radar apparatus according to claim 3, wherein, when calculating each local maximum value from two M sweep signals, the MRAV processor calculates the beat frequency by performing FFT and MUSIC processing on M sweeps.

9. The radar apparatus according to claim 3, further comprising a sign reversing unit that reverses signs of range, velocity, and angle according to a sign or calculated, range if the radar apparatus employs a system in which when the sweep signal has a real number, Complex Fourier Transform is performed on a sampled signal to extract a positive or negative signal from the beat frequencies, thereby obtaining a complex number signal.

10. The radar apparatus according to claim 3, further comprising a sweep controller that controls a sweep so that a sweep signal having an increased slope is transmitted for a short range and a sweep signal having a decreased slope is transmitted for a long range.

11. The radar apparatus according to claim 10, wherein the sweep controller selects two sweeps having different time intervals by using a critical factor calculated based on velocity and range.

12. The radar apparatus according to claim 10, wherein the sweep controller selects two sweeps having different time intervals by periodically changing to a different sweep for every cycle.

13. A radar apparatus comprising:

a transmitter/receiver that transmits an FMCW modulated sweep signal M times;
an FFT unit that perform Fast Fourier Transform on the M sweep signals received in response to the transmission from the transmitter/receiver; and
an MRAV processor that performs smoothing over sweeps using F (sweep number, target number) resulting from calculation of beat frequencies by phase monopulse, amplitude monopulse, or MUSIC of the M sweeps when calculating a maximum value of each sweep signal from the M sweep signals obtained by Fourier Transform performed by the FFT unit, and calculates a range after calculating a velocity based on results of the smoothing.

14. A radar apparatus comprising:

a transmitter/receiver that transmits an FMCW modulated sweep signal M times;
an FFT unit that performs Fast Fourier Transform on the M sweep signals received in response to transmission from the transmitter/receiver; and
an MRAV processor that calculates a local maximum value on beat frequency-sweep axis by Hough transformation using F (sweep number, target number) resulting from calculation of beat frequencies by phase monopulse, amplitude monopulse, or MUSIC of the M sweeps when calculating a maximum value of each sweep signal from the M sweep signals obtained by Fourier Transform performed by the FFT unit, and calculates a range after calculating a velocity corresponding to the calculated local maximum value from a beat frequency difference and a sweep time.

FIG. 1

# FIG. 2

```
                    ( START )
                        |
        .---------------+
        |               v
        |      /TRANSMISSION/RECEPTION/----S201
        |      /   DATA INPUT        /
        |               |
        |               v
        |      +---------------------+
        |      |   UP SEQUENCE/DOWN  |----S202
        |      | SEQUENCE SEPARATION |
        |      +---------------------+
        |               |
        |               v
        |      +---------------------+
        |      |   UP SEQUENCE/DOWN  |----S203
        |      |  SEQUENCE FFT & DBF |
        |      +---------------------+
        |               |
        |               v
        |      +---------------------+
        |      |   UP SEQUENCE/DOWN  |
        |      | SEQUENCE FREQUENCY  |----S204
        |      |  PEAK EXTRACTION    |
        |      +---------------------+
        |               |
        |               v
        |      +---------------------+
        |      |   UP SEQUENCE/DOWN  |----S205
        |      |  SEQUENCE PAIRING   |
        |      +---------------------+
        |               |
        |               v
        |      +---------------------+
        |      |   RANGE/VELOCITY    |----S206
        |      |    CALCULATION      |
        |      +---------------------+
        |               |
        |               v
S209--+------------+   +---------------------+
      | NEXT CYCLE |   | ANGLE CALCULATION   |----S207
      +------------+   +---------------------+
        ^    |               |
        |                    v
        |           S208
        |    NO   / CYCLE COMPLETED? \
        +--------<                    >
                  \                  /
                        |
                       YES
                        |
                        v
                    (  END  )
```

FIG. 3

FIG. 4

FIG. 5

# FIG. 6

FIG. 7

EP 2 434 309 A1

# FIG. 8

START CYCLE

FFT — S11

DBF — S12

S13
SWEEP COMPLETED? — NO

YES

DETECT THRESHOLD OF SWEEPS 1 & 2 — S14

STORE TARGET DETECTED IN SWEEPS 1 & 2 — S15

EXTRACT BEAT FREQUENCY — S16

CALCULATE VELOCITY V — S17

CALCULATE RANGE R — S18

CALCULATE ANGLE $\theta$ — S19

S22
CHANGE TARGET NUMBER

STORE TARGET INFORMATION — S20

S21
TARGET COMPLETED? — NO

YES

TO NEXT CYCLE

# FIG. 9

CYCLE

CYCLE

SWEEP1    SWEEP2

SWEEP1    SWEEP2

FREQUENCY

TIME

N SAMPLE

N SAMPLE

N SAMPLE

N SAMPLE

TIME INTERVAL T12

TIME INTERVAL T12

# FIG. 10

(a) SWEEP 1    Σ

TARGET

BEAT
FREQUENCY

FREQUENCY

(b) SWEEP 2    Σ

TARGET
BEAT
FREQUENCY

FREQUENCY

# FIG. 11

(a)

ELEMENT NUMBER

TIME AXIS

E1 E2 ... EM-1 EM

T1

...

TN-1

TN

⬇ FFT

(b)

ELEMENT NUMBER

FREQUENCY
AXIS F1

E1 E2 ... EM-1 EM

BEAT
FREQUENCY

...

FN-1

FN

⬇ DBF

(c)

BEAM NUMBER

FREQUENCY
AXIS F1

B1 B2 ... BM-1 BM

BEAT
FREQUENCY

...

FN-1

FN

# FIG. 12

(a)

ELEMENT NUMBER

E1 E2      EM-1 EM

TIME AXIS
T1

TN-1

TN

⇩ DBF

(b)

BEAM NUMBER

B1 B2      BM-1 BM

FREQUENCY
AXIS F1

FN-1

FN

⇩ FFT

(c)

BEAM NUMBER

B1 B2      BM-1 BM

FREQUENCY
AXIS F1

BEAT
FREQUENCY

FN-1

FN

## FIG. 13

```
                    ┌──────────────────┐
                    │   START CYCLE    │
                    └──────────────────┘
                              │
     ┌────────────────────────┤
     │                        ▼
     │              ┌──────────────────┐
     │              │  FFT (MONOPULSE) │──S31
     │              └──────────────────┘
     │                        │
     │                        ▼
     │              ┌──────────────────┐
     │              │       DBF        │──S12
     │              └──────────────────┘
     │                        │
     │                        ▼       S13
     │        NO    ◇───────────────◇
     └──────────────│ SWEEP COMPLETED? │
                    ◇───────────────◇
                              │ YES
                              ▼
                    ┌──────────────────┐
                    │ DETECT THRESHOLD │──S14
                    │  OF SWEEPS 1 & 2 │
                    └──────────────────┘
                              │
                              ▼
                    ┌──────────────────┐
                    │STORE TARGET DETECTED│──S15
              ┌─────│ IN SWEEPS 1 & 2  │
              │     └──────────────────┘
              │               │
              │     ┌─────────┤
              │     │         ▼
              │     │┌──────────────────┐
              │     ││  EXTRACT BEAT    │──S16
              │     ││   FREQUENCY      │
              │     │└──────────────────┘
              │     │         │
              │     │         ▼
              │     │┌──────────────────┐
              │     ││ CALCULATE VELOCITY V │──S17
              │     │└──────────────────┘
              │     │         │
              │     │         ▼
              │     │┌──────────────────┐
              │     ││ CALCULATE RANGE R │──S18
              │     │└──────────────────┘
              │     │         │
              │     │         ▼
              │     │┌──────────────────┐
   S22        │     ││ CALCULATE ANGLE θ │──S19
    │         │     │└──────────────────┘
    ▼         │     │         │
┌─────────┐   │     │         ▼
│ CHANGE TARGET│   │┌──────────────────┐
│ NUMBER  │───┘     ││ STORE TARGET     │──S20
└─────────┘         ││ INFORMATION      │
    ▲               │└──────────────────┘
    │               │         │        S21
    │      NO       │         ▼
    └───────────────◇───────────────◇
                    │ TARGET COMPLETED? │
                    ◇───────────────◇
                              │ YES
                              ▼
                    ┌──────────────────┐
                    │   TO NEXT CYCLE  │
                    └──────────────────┘
```

35

# FIG. 14

(a)

Σ

Δ

. . . . . . . . . .

IN SAME BANK
SWEEP 1

FREQUENCY

(b)

PHASE MONOPULSE

Σ

Δ

. . . . . . . . . .

IN SAME BANK
SWEEP 2

FREQUENCY

# FIG. 15

Σ AND Δ FORMATION

# FIG. 16

PHASE MONOPULSE

(a)

(b)

# FIG. 17

AMPLITUDE b1 $\Sigma$ $\Sigma$' bN

bp Bp'

FREQUENCY

# FIG. 18

PHASE MONOPULSE

(a) AMPLITUDE

TARGET

$\Sigma$ m1 $\Sigma$'

m2

FREQUENCY

(b) ERROR VOLTAGE

$\dfrac{\varepsilon}{\left(\dfrac{m2}{m1}\right)}$

OBSERVED FREQUENCY FREQUENCY

# FIG. 19

```
         ┌─────────────────────┐
         │     START CYCLE     │
         └─────────────────────┘
                    │
      ┌────────────►│
      │             ▼
      │   ┌─────────────────────┐
      │   │        FFT          │──── S41
      │   │      (MUSIC)        │
      │   └─────────────────────┘
      │             │
      │             ▼
      │   ┌─────────────────────┐
      │   │        DBF          │──── S12
      │   └─────────────────────┘
      │             │
      │             ▼                    S13
      │          ◇─────────────────────◇
    NO└──────────   SWEEP COMPLETED?    
                 ◇─────────────────────◇
                        │ YES
                        ▼
              ┌─────────────────────┐
              │  DETECT THRESHOLD   │──── S14
              │   OF SWEEPS 1 & 2   │
              └─────────────────────┘
                        │
                        ▼
              ┌─────────────────────┐
              │ STORE TARGET DETECTED│──── S15
              │   IN SWEEPS 1 & 2   │
              └─────────────────────┘
                        │
      ┌────────────────►│
      │                 ▼
      │       ┌─────────────────────┐
      │       │ EXTRACT BEAT FREQUENCY│──── S16
      │       └─────────────────────┘
      │                 │
      │                 ▼
      │       ┌─────────────────────┐
      │       │ CALCULATE VELOCITY V │──── S17
      │       └─────────────────────┘
      │                 │
      │                 ▼
      │       ┌─────────────────────┐
      │       │  CALCULATE RANGE R   │──── S18
      │       └─────────────────────┘
      │                 │
  S22 │                 ▼
      │       ┌─────────────────────┐
      │       │  CALCULATE ANGLE θ   │──── S19
      │       └─────────────────────┘
      │                 │
 ┌────────────┐         ▼
 │CHANGE TARGET│ ┌─────────────────────┐
 │  NUMBER    │ │STORE TARGET INFORMATION│──── S20
 └────────────┘ └─────────────────────┘
      ▲                 │
      │                 ▼            S21
      │              ◇─────────────────────◇
    NO└──────────     TARGET COMPLETED?    
                   ◇─────────────────────◇
                        │ YES
                        ▼
              ┌─────────────────────┐
              │    TO NEXT CYCLE    │
              └─────────────────────┘
```

FIG. 20

(a)

AMPLITUDE

DETECTED BANK ±M BANKS

#1                                                              #N

. . . . . .

FREQUENCY

SWEEP1        SWEEP2

⬇  2×M BANK EXTRACTION
    RBB CALCULATION

(b)

AMPLITUDE

FREQUENCY

SWEEP1    SWEEP2

40

# FIG. 21

EP 2 434 309 A1

# FIG. 22

# FIG. 23

(a) TIME AXIS T1

SWEEP NUMBER

E1  E2          EM-1 EM

TN-1

TN

⇩ FIRST FFT

(b)

SWEEP NUMBER

E1 E2          EM-1 EM

FREQUENCY AXIS F1

TARGET EXTRACTION BANK

FN-1

FN

⇩ SECOND FFT

(c)

FREQUENCY NUMBER

F1  F2          FM-1 FM

Σ SIGNAL

TARGET EXTRACTION

# FIG. 24

RANGE

VELOCITY RESOLUTION
BEFORE PROCESSING

RANGE
RESOLUTION
BEFORE
PROCESSING

VELOCITY RESOLUTION
AFTER PROCESSING

VELOCITY

## FIG. 25

HIGH VELOCITY RESOLUTION
(RANGE RESOLUTION IS THE SAME)

# FIG. 26

1 CYCLE

N SWEEP

. . . . . . .

FREQUENCY

M SWEEP FFT
(FIRST TIME)

M SWEEP FFT
(SECOND TIME)

MRAV

# FIG. 27

(a)

SWEEP NUMBER

TIME AXIS    E1  E2                    EM-1  EM
T1

TN-1

TN

FIRST FFT ($\Sigma$, $\Delta$)

(b)

SWEEP NUMBER

E1  E2                    EM-1  EM

FREQUENCY
AXIS  F1

TARGET EXTRACTION BANK

FN-1

FN

SECOND FFT
(ADD $\Sigma$, $\Delta$ OF FIRST FFT)

(c)

FREQUENCY NUMBER

F1  F2                    FM-1  FM

$\Sigma$ SIGNAL

TARGET EXTRACTION

FREQUENCY NUMBER

F1  F2                    FM-1  FM

$\Delta$ SIGNAL

# FIG. 28

(a)

SWEEP NUMBER

E1  E2          EM-1  EM

TIME AXIS
T1

TN-1

TN

⬇ FIRST FFT (Σ)

(b)

SWEEP NUMBER

E1  E2          EM-1  EM

FREQUENCY
AXIS F1

TARGET EXTRACTION BANK

A          B

FN-1

FN

⬇ SECOND FFT
(MONOPULSE BY M SIGNAL)

(c)

FREQUENCY NUMBER

A+B    F1  F2          FM-1  FM

Σ SIGNAL

TARGET EXTRACTION

FREQUENCY NUMBER

A-B    F1  F2          FM-1  FM

Δ SIGNAL

# FIG. 29

```
                    ┌─────────────────────┐
                    │     START CYCLE     │
                    └─────────────────────┘
                               │
          ┌────────────────────┤
          │        ┌─────────────────────────┐
          │        │           FFT           │~S11
          │        └─────────────────────────┘
          │                    │
          │        ┌─────────────────────────┐
          │        │           DBF           │~S12
          │        └─────────────────────────┘
          │                    │                         S13
     NO   │          ◇─────────────────────◇
     ◁────┴──────────  SWEEP COMPLETED?
                        ◇─────────────────────◇
                               │ YES
          ┌────────────────────┤
          │        ┌─────────────────────────┐
          │        │   EXTRACT TARGET BANK   │~S51
          │        │   EXCEEDING THRESHOLD   │
          │        └─────────────────────────┘
          │                    │
          │        ┌─────────────────────────┐
          │        │  SECOND FFT (MONOPULSE)  │~S61
          │        └─────────────────────────┘
          │                    │                         S53
     NO   │          ◇─────────────────────◇
     ◁────┴──────────  SWEEP COMPLETED?
                        ◇─────────────────────◇
                               │ YES
                    ┌─────────────────────────┐
                    │   DETECT THRESHOLD OF   │~S14
                    │      SWEEPS 1 & 2       │
                    └─────────────────────────┘
                               │
                    ┌─────────────────────────┐
                    │  STORE TARGET DETECTED  │~S15
                    │     IN SWEEPS 1 & 2     │
                    └─────────────────────────┘
          ┌────────────────────┤
          │        ┌─────────────────────────┐
          │        │  EXTRACT BEAT FREQUENCY  │~S16
          │        └─────────────────────────┘
          │                    │
          │        ┌─────────────────────────┐
          │        │   CALCULATE VELOCITY V   │~S17
          │        └─────────────────────────┘
          │                    │
          │        ┌─────────────────────────┐
          │        │    CALCULATE RANGE R     │~S18
          │        └─────────────────────────┘
          │                    │
          │        ┌─────────────────────────┐
          │        │   CALCULATE ANGLE θ      │~S19
   S22    │        └─────────────────────────┘
   ┌──────┴──────┐            │
   │CHANGE TARGET│  ┌─────────────────────────┐
   │   NUMBER    │  │ STORE TARGET INFORMATION │~S20
   └─────────────┘  └─────────────────────────┘
          │                    │                         S21
     NO   │          ◇─────────────────────◇
     ◁────┴──────────  TARGET COMPLETED?
                        ◇─────────────────────◇
                               │ YES
                    ┌─────────────────────┐
                    │    TO NEXT CYCLE    │
                    └─────────────────────┘
```

# FIG. 30

(a)

SWEEP NUMBER

E1  E2                    EM-1 EM

TIME AXIS
T1

TN-1

TN

FIRST FFT ( Σ )

(b)

SWEEP NUMBER

E1  E2                    EM-1 EM

FREQUENCY
AXIS F1

TARGET EXTRACTION BANK

FN-1

FN

MUSIC
(MUSIC BY M SIGNAL)

(c)

FREQUENCY NUMBER

F1  F2                    FM-1 FM

MUSIC
SPECTRUM

TARGET EXTRACTION

# FIG. 31

```
                    ┌─────────────────────┐
                    │     START CYCLE     │
                    └─────────────────────┘
                              │
         ┌────────────────────┤
         │            ┌────────────────────┐
         │            │        FFT         │── S11
         │            └────────────────────┘
         │                      │
         │            ┌────────────────────┐
         │            │        DBF         │── S12
         │            └────────────────────┘
         │                      │                        S13
    NO   │            ◇─────────────────────◇
    ─────┘            │  SWEEP COMPLETED?   │
                      ◇─────────────────────◇
                              │ YES
         ┌────────────────────┤
         │            ┌────────────────────┐
         │            │  EXTRACT TARGET BANK │── S51
         │            │  EXCEEDING THRESHOLD │
         │            └────────────────────┘
         │                      │
         │            ┌────────────────────┐
         │            │  SECOND FFT (MUSIC) │── S71
         │            └────────────────────┘
         │                      │                        S53
    NO   │            ◇─────────────────────◇
    ─────┘            │  SWEEP COMPLETED?   │
                      ◇─────────────────────◇
                              │ YES
                    ┌────────────────────┐
                    │  DETECT THRESHOLD OF │── S14
                    │    SWEEPS 1 & 2      │
                    └────────────────────┘
                              │
                    ┌────────────────────┐
                    │ STORE TARGET DETECTED│── S15
                    │   IN SWEEPS 1 & 2    │
                    └────────────────────┘
         ┌────────────────────┤
         │            ┌────────────────────┐
         │            │ EXTRACT BEAT FREQUENCY│── S16
         │            └────────────────────┘
         │                      │
         │            ┌────────────────────┐
         │            │  CALCULATE VELOCITY V │── S17
         │            └────────────────────┘
         │                      │
         │            ┌────────────────────┐
         │            │  CALCULATE RANGE R   │── S18
         │            └────────────────────┘
         │                      │
    S22  │            ┌────────────────────┐
         │            │  CALCULATE ANGLE θ   │── S19
 ┌───────────────┐    └────────────────────┘
 │ CHANGE TARGET │              │
 │    NUMBER     │    ┌────────────────────┐
 └───────────────┘    │ STORE TARGET INFORMATION│── S20
         │            └────────────────────┘
         │                      │                  S21
    NO   │            ◇─────────────────────◇
    ─────┘            │  TARGET COMPLETED?  │
                      ◇─────────────────────◇
                              │ YES
                    ┌─────────────────────┐
                    │    TO NEXT CYCLE    │
                    └─────────────────────┘
```

# FIG. 32

```
            ( START CYCLE )
                  │
                  ▼
      ┌──────────────────────┐
      │ DETECT THRESHOLD OF  │ ──S14
      │ SWEEPS 1 & 2         │
      └──────────────────────┘
                  │
                  ▼
      ┌──────────────────────┐
      │ STORE TARGET DETECTED│ ──S15
      │ IN SWEEPS 1 & 2      │
      └──────────────────────┘
                  │
                  ▼
      ┌──────────────────────┐
      │ CALCULATE VELOCITY V │ ──S17
      └──────────────────────┘
                  │
                  ▼
      ┌──────────────────────┐
      │ CALCULATE RANGE R    │ ──S18
      └──────────────────────┘
                  │
                  ▼
      ┌──────────────────────┐
      │ CALCULATE ANGLE θ    │ ──S19
      └──────────────────────┘
                  │
                  ▼
   NO      ╱───────────╲        S61
  ◀───────<    R<0 ?    >
           ╲───────────╱
                  │ YES
                  ▼
      ┌──────────────────────┐
      │ REVERSE SIGNS OF     │ ──S62
      │ R, V, θ             │
      └──────────────────────┘
                  │
                  ▼
┌──────────────────┐   ┌──────────────────────┐
│ CHANGE TARGET    │   │ STORE TARGET         │ ──S20
│ NUMBER           │   │ INFORMATION          │
└──────────────────┘   └──────────────────────┘
       │S22                    │
       ▲           NO   ╱───────────╲    S21
       └───────────────<  TARGET     >
                        ╲ COMPLETED? ╱
                          ───────────
                               │ YES
                               ▼
                       ( TO NEXT CYCLE )
```

# FIG. 33

IN CASE OF DOWN-CHIRP

OBSERVED FREQUENCY

ACTUAL MOVEMENT
(MOVING AWAY)

OBSERVED
MOVEMENT

R1  R2

R2'  R1'

$V' = (R2' - R1') / T12 < 0$

BEAT FREQUENCY

(NEGATIVE)  0  (POSITIVE)

FIG. 34

10
11
12
20
TRANSMISSION CONTROL SIGNAL
21
22

30
TRANSMISSION/RECEPTION CONTROLLER — 39
SWEEP CONTROLLER — 38
TIMING SIGNAL

31 AD CONVERTER
ELEMENT SIGNAL
32 FFT UNIT
34 DBF UNIT
Σ BEAM
Δ BEAM
35 MRAV PROCESSOR (RANGE AND VELOCITY MEASUREMENT)
Σ BEAM
36 ANGLE MEASURING UNIT
RANGE, VELOCITY
ANGLE

# FIG. 35

# FIG. 36

# FIG. 37

EP 2 434 309 A1

# FIG. 38

CYCLE

FREQUENCY

TIME

TYPE 1          TYPE 2

# FIG. 39

START CYCLE

CALCULATE Cr = K × V/R — S71

S72

NO — TARGET NUMBER?

YES

S73

IS THERE POSITIVE Cr? — NO (MOVING AWAY)

YES (APPROACHING)

S76

S74 — EXTRACT Max [Cr]          EXTRACT Min [Cr]

S77

S75 — SELECT SWEEP HAVING TARGET VELOCITY OF Max [CRITICAL FACTOR]          SELECT SWEEP HAVING TARGET VELOCITY OF Min [CRITICAL FACTOR]

TO NEXT CYCLE

## FIG. 40

```
                          ┌─────────────┐
                          │    START    │
                          └──────┬──────┘
                                 │
                                 ▼
                    ╱──────────────────────╲
                   │   SELECT SWEEP SET      │──── S81
                    ╲──────────────────────╱
                                 │
                                 ▼
                    ┌──────────────────────┐
                    │   SET INITIAL SWEEP   │──── S82
                    └──────────┬───────────┘
  S85                          │
   │                           │
   ▼                           ▼
┌──────────────┐      ┌──────────────────────┐
│ CHANGE SWEEP │      │      SET SWEEP        │──── S83
└──────────────┘      └──────────┬───────────┘
       ▲                         │            S84
       │                         ▼
       │              ◇──────────────────────◇
       │    NO        │        CYCLE          │
       └──────────────│      COMPLETED?       │
                      ◇──────────┬───────────◇
                                 │ YES
                                 ▼
                    ┌──────────────────────┐
                    │     TO NEXT CYCLE     │
                    └──────────────────────┘
```

## FIG. 41

S : SELECTED SWEEP NUMBER

| CYCLE | 1 | 2 | 3 | 4 | 5 | 6 | 7 | 8 |
|---|---|---|---|---|---|---|---|---|
| SHORT RANGE MODE | S3 | S2 | S3 | S2 | S3 | S2 | S3 | S4 |
| LONG RANGE MODE | S3 | S2 | S3 | S2 | S3 | S2 | S3 | S4 |

SUBSEQUENTLY,
REPEAT 8 CYCLES

# FIG. 42

1 CYCLE

T12

TIME

FREQUENCY

SWEEP 1    SWEEP 2    SWEEP 3    SWEEP 4

FREQUENCY BANK    · · · · · · · · · ·

TIME

TARGET 1    TARGET 2

SWEEP 4
SWEEP 3
SWEEP 2
SWEEP 1

FREQUENCY

FREQUENCY DIFFERENCE
(RELATIVE POSITION DIFFERENCE)

EP 2 434 309 A1

# FIG. 43

START CYCLE

FFT — S11

DBF — S12

SWEEP COMPLETED? — S13
NO / YES

DETECT THRESHOLD — S91

EXTRACT BEAT FREQUENCY — S92

MONOPULSE PROCESSING — S93

SWEEP COMPLETED? — S94
NO / YES

SMOOTHING FILTER — S95

CALCULATE VELOCITY V — S17

CALCULATE RANGE R — S18

CALCULATE ANGLE θ — S19

STORE TARGET INFORMATION — S20

CHANGE TARGET NUMBER — S22

TARGET COMPLETED? — S21
NO / YES

TO NEXT CYCLE

60

# FIG. 44

1 CYCLE

TIME

FREQUENCY

SWEEP 1 SWEEP 2 SWEEP 3 SWEEP 4

FREQUENCY BANK

. . . . . . . . . .

TIME

TARGET 1    TARGET 2

SWEEP 4
SWEEP 3
SWEEP 2
SWEEP 1

FREQUENCY

LINE DETECTION &
VELOCITY CALCULATION BY
HOUGH TRANSFORMATION

FREQUENCY DIFFERENCE
(RELATIVE POSITION DIFFERENCE)

FIG. 45

```
                    ┌─────────────────────┐
                    │    START CYCLE      │
                    └─────────────────────┘
                               │
            ┌──────────────────┤
            │          ┌─────────────────────┐
            │          │        FFT          │──S11
            │          └─────────────────────┘
            │                    │
            │          ┌─────────────────────┐
            │          │        DBF          │──S12
            │          └─────────────────────┘
            │                    │           S13
     NO     │          ◇─────────────────────◇
    ◁───────┴──────────  SWEEP COMPLETED?
                        ◇─────────────────────◇
                               │ YES
                    ┌─────────────────────┐
                    │   DETECT THRESHOLD   │──S91
                    └─────────────────────┘
            ┌──────────────────┤
            │          ┌─────────────────────┐
            │          │ EXTRACT BEAT FREQUENCY │──S92
            │          └─────────────────────┘
            │                    │
            │          ┌─────────────────────┐
            │          │ MONOPULSE PROCESSING │──S93
            │          └─────────────────────┘
            │                    │           S94
     NO     │          ◇─────────────────────◇
    ◁───────┴──────────  SWEEP COMPLETED?
                        ◇─────────────────────◇
                               │ YES
                    ┌─────────────────────┐
                    │  HOUGH TRANSFORMATION │──S101
                    └─────────────────────┘
                               │
                    ┌─────────────────────┐
                    │   DETECT THRESHOLD   │──S102
                    └─────────────────────┘
            ┌──────────────────┤
            │          ┌─────────────────────┐
            │          │  CALCULATE VELOCITY V │──S17
            │          └─────────────────────┘
            │                    │
            │          ┌─────────────────────┐
            │          │  CALCULATE RANGE R   │──S18
            │          └─────────────────────┘
   S22      │                    │
   ┌─────────────┐     ┌─────────────────────┐
   │CHANGE TARGET│     │  CALCULATE ANGLE θ   │──S19
   │   NUMBER    │     └─────────────────────┘
   └─────────────┘                │
            │          ┌─────────────────────┐
            │          │ STORE TARGET INFORMATION │──S20
            │          └─────────────────────┘
            │                    │           S21
     NO     │          ◇─────────────────────◇
    ◁───────┴──────────  TARGET COMPLETED?
                        ◇─────────────────────◇
                               │ YES
                    ┌─────────────────────┐
                    │    TO NEXT CYCLE    │
                    └─────────────────────┘
```

## FIG. 46

## FIG. 47

LINE REPRESENTATION BY $\theta - \rho$ PARAMETERS

FIG. 48

FIG. 49

$\rho - \theta$ AXIS

HOUGH TRANSFORMATION OF LINE

FIG. 50

1 CYCLE

TIME

FREQUENCY

SWEEP 1   SWEEP 2   SWEEP 3   SWEEP 4

FREQUENCY BANK

TIME

TARGET 1     TARGET 2

SWEEP 4
SWEEP 3
SWEEP 2
SWEEP 1

FREQUENCY

VELOCITY CALCULATION
BY SAME BANK VIDEO
INTEGRATION, LINE FITTING

FREQUENCY DIFFERENCE
(RELATIVE POSITION DIFFERENCE)

## FIG. 51

START CYCLE

FFT ⌇S11

DBF ⌇S12

SWEEP COMPLETED? S13
NO
YES

DETECT THRESHOLD ⌇S91

EXTRACT BEAT FREQUENCY ⌇S92

MONOPULSE PROCESSING ⌇S93

SWEEP COMPLETED? S94
NO
YES

VIDEO INTEGRATION OVER SWEEPS ⌇S111

DETECT THRESHOLD ⌇S112

FREQUENCY BANK COMPLETED? S113
NO
YES

LEAST SQUARE FITTING ⌇S114

CALCULATE VELOCITY V ⌇S17

CALCULATE RANGE R ⌇S18

CALCULATE ANGLE θ ⌇S19

STORE TARGET INFORMATION ⌇S20

S22
CHANGE FREQUENCY BANK

FREQUENCY BANK COMPLETED? S21
NO
YES

TO NEXT CYCLE

66

<table>
<tr><td align="center">**INTERNATIONAL SEARCH REPORT**</td><td>International application No.<br><br>PCT/JP2010/054839</td></tr>
</table>

A.  CLASSIFICATION OF SUBJECT MATTER
*G01S13/34*(2006.01)i, *G01S7/02*(2006.01)i, *G01S13/44*(2006.01)i

According to International Patent Classification (IPC) or to both national classification and IPC

B.  FIELDS SEARCHED

Minimum documentation searched (classification system followed by classification symbols)
G01S7/00-7/42, G01S13/00-13/95

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2009-069124 A  (Mitsubishi Electric Corp.),<br>02 April 2009 (02.04.2009),<br>entire text; all drawings<br>& US 2009/0073026 A1 | 1-14 |
| A | JP 2007-286033 A  (Omron Corp.),<br>01 November 2007 (01.11.2007),<br>entire text; all drawings<br>& EP 1837679 A1          & US 2008/0030399 A1 | 1-14 |
| A | JP 2006-242695 A  (Denso Corp.),<br>14 September 2006 (14.09.2006),<br>entire text; all drawings<br>(Family: none) | 1-14 |

☒  Further documents are listed in the continuation of Box C.          ☐  See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| | |
|---|---|
| Date of the actual completion of the international search<br>    07 April, 2010 (07.04.10) | Date of mailing of the international search report<br>    18 May, 2010 (18.05.10) |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/054839

| | C (Continuation). DOCUMENTS CONSIDERED TO BE RELEVANT | |
|---|---|---|
| Category* | Citation of document, with indication, where appropriate, of the relevant passages | Relevant to claim No. |
| A | JP 11-281729 A  (Toyota Central Research and Development Laboratories, Inc.), 15 October 1999 (15.10.1999), entire text; all drawings (Family: none) | 1-14 |
| P,A | JP 2009-293968 A  (Fujitsu Ten Ltd.), 17 December 2009 (17.12.2009), entire text; all drawings (Family: none) | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **HARRY B. LEE.** Resolution Threshold of Beamspace MUSIC For Two Closely Spaced Emitters. *IEEE Trans. ASSP,* September 1990, vol. 38 (9